# EUROPÄISCHE PATENTSCHRIFT

(11) **EP 3 426 851 B1**
(45) Veröffentlichungstag und Bekanntmachung des Hinweises auf die Patenterteilung: **01.05.2024**
(21) Anmeldenummer: 17716788.9
(22) Anmeldetag: 07.04.2017
(51) Int. Cl.: E02F 9/26, B66C 13/18, B66C 13/46, B66C 15/04, B66C 13/48, E02F 9/24

(54) **BAUMASCHINE, INSBESONDERE KRAN, UND VERFAHREN ZU DEREN STEUERUNG**
CONSTRUCTION MACHINE, IN PARTICULAR A CRANE, AND METHOD FOR THE CONTROL THEREOF
ENGIN DE CHANTIER, EN PARTICULIER GRUE, ET PROCÉDÉ DE COMMANDE DUDIT ENGIN DE CHANTIER

(30) Priorität: 08.04.2016 DE 102016004266
(43) Veröffentlichungstag der Anmeldung: 16.01.2019
(73) Patentinhaber: Liebherr-Werk Biberach GmbH, 88400 Biberach an der Riss (DE)
(72) Erfinder: STANGER, Norbert, 88448 Attenweiler (DE)
(74) Vertreter: Thoma, Michael
(86) Internationale Anmeldenummer: PCT/EP2017/000449
(87) Internationale Veröffentlichungsnummer: WO 2017/174202

(56) Entgegenhaltungen:
- EP-A1- 3 037 376
- DE-A1-102011 002 952
- JP-A- H0 761 800
- US-A1- 2002 178 830
- US-A1- 2007 050 137
- US-A1- 2010 070 179
- US-A1- 2011 029 098
- US-A1- 2013 299 440
- US-A1- 2013 345 857
- US-A1- 2014 168 266
- US-A1- 2014 218 233
- US-A1- 2016 031 680
- US-A1- 2016 034 730
- US-A1- 2016 035 120
- US-A1- 2016 035 251
- US-B1- 6 845 311
- CHENG ZHANG ET AL: "Improving lifting motion planning and re-planning of cranes with consideration for safety and efficiency", ADVANCED ENGINEERING INFORMATICS, ELSEVIER, AMSTERDAM, NL, Bd. 26, Nr. 2, 9. Januar 2012 (2012-01-09) , Seiten 396-410, XP028406022, ISSN: 1474-0346, DOI: 10.1016/J.AEI.2012.01.003 [gefunden am 2012-01-17]
- Cheng Zhang: "Improving crane safety by agent-based dynamic motion planning using UWB real-time location system", , 1. November 2010 (2010-11-01), XP055232984, Gefunden im Internet: URL:http://spectrum.library.concordia.ca/7 177/1/Zhang_PhD_S2011.pdf [gefunden am 2015-12-02]

## Beschreibung

Die vorliegende Erfindung betrifft eine Baumaschine, insbesondere in Form eines Krans wie Turmdrehkran, mit einer Steuervorrichtung zum Steuern zumindest eines Arbeitsaggregats der Baumaschine unter Verwendung eines Bauwerkdatenmodells, das digitale Informationen über ein zu errichtendes und/oder zu bearbeitendes Bauwerk enthält. Die Erfindung betrifft ferner auch ein Verfahren zum Steuern einer solchen Baumaschine mit Hilfe digitaler Daten aus einem solchen Bauwerkdatenmodell.

Die Planung des Kraneinsatzes auf Baustellen erfolgt heute meist durch die Arbeitsvorbereitung der beteiligten Bauunternehmen bzw. im Detail durch die Poliere vor Ort. Grundlagen für die Planung sind dabei die Arbeitspläne, die meist noch zwei-, bisweilen auch schon dreidimensional sind, ferner der Zeitplan und teilweise der Kostenplan des Bauvorhabens. Da die Arbeitspläne meist gewerkspezifisch sind, ist eine endgültige Kontrolle der Kollisionsfreiheit des Krans erst bei der Ausführung möglich. Zeitliche Verschiebungen von einzelnen Aufgaben sowie Planänderungen sind in den Unterlagen oft nicht rechtzeitig nachgetragen. Ein solches System ist in US2016/031680A1 offenbart.

In jüngerer Zeit werden für das Planen, Errichten, Bearbeiten und Überprüfen von Bauwerken bisweilen auch schon digitale Bauwerkdatenmodelle verwendet, die bisweilen als BIM (Building Information Model) bezeichnet werden und digitale Informationen über das zu errichtende bzw. zu bearbeitende Bauwerk enthalten, wobei es sich hierbei insbesondere um ein Gesamtmodell handelt, das in der Regel die dreidimensionalen Planungen aller Gewerke, den Zeitplan und auch den Kostenplan enthält. Solche Bauwerkdatenmodelle oder BIMs sind in der Regel computerlesbare Dateien oder Dateikonglomerate und ggfs. verarbeitende Computerprogramm-Bausteine zum Verarbeiten solcher Dateien, in denen Informationen und Charakteristika, die das zu errichtende bzw. zu bearbeitende Bauwerk und dessen relevante Eigenschaften in Form digitaler Daten beschreiben.

Allgemein können solche Bauwerkdatenmodelle zwei-, drei- oder mehrdimensionale CAD-Daten zur Visualisierung des Bauwerks und/oder dessen Bauwerksteile enthalten, aber auch andere relevante Informationen über das Bauwerk, beispielsweise dessen Zeitplan zu seiner Errichtung, den Kostenplan, Informationen über die umgebende Infrastruktur wie Zufahrtsstraßen, Energie- und Wasserversorgung, oder logistische Informationen über benötigte Hilfsmittel für die Errichtung bzw. Bearbeitung des Bauwerks, umfassen. Als charakteristische Bauwerksdaten sind oft Bauwerksgrößen wie Bauvolumen, Bauwerkshöhe, Erstreckungsmaße im Aufriss und Grundriss, Materialvolumina wie benötigtes Betonvolumen, Ziegelsteinvolumen etcetera, oder Bauteilgewichte von einzelnen Bauwerkskomponenten wie Stahlträgern, Fertigbauteilen oder ähnliches enthalten. Das Bauwerkdatenmodell und seine Dateien bzw. das Dateienkonglomerat ist dabei häufig verschickbar und/oder netzwerkfähig, um verschiedenen Baubeteiligten zur Verfügung zu stehen.

Mit Hilfe solcher Bauwerkdatenmodelle werden viele Prozesse bei der Errichtung eines Bauwerks computergestützt bearbeitet, wobei beispielsweise in der klassischen Bauplanung ein Architekt einen Entwurf erstellt und diesen mit Hilfe von CAD-Systemen zeichnet, woraufhin dann zur Kostenkalkulation auf Basis der CAD-Zeichnungen eine Mengenermittlung erstellt werden kann oder die Pläne anderen Fachingenieuren, Brandschutzgutachtern oder Behörden vorgelegt werden können. Treten Planungsänderungen auf, werden die Zeichnungen geändert und mit den Beteiligten abgeglichen, wobei die Mengenermittlung angepasst und die Kostenkalkulation überarbeitet werden, was sich unter Zuhilfenahme des integrierten BIM alles deutlich vereinfacht und von Softwarebausteinen, die auf die Daten des Bauwerkdatenmodells zugreifen können, zumindest teilweise automatisch erledigt wird.

In diesem Kontext wurde bereits vorgeschlagen, Daten betreffend den Betrieb eines Krans in ein BIM bzw. Bauwerkdatenmodell einzubinden. Die Schrift WO 2016/019158 A1 beschreibt beispielsweise ein Verfahren, mittels dessen ein BIM durch Kranbetriebsdaten aktualisiert wird, wobei anhand der durch den Kran zu versetzenden Bauteile eine Zeitschiene bzw. ein Zeitplan generiert wird, die die benötigten Kraneinsätze beinhaltet und in das Datenmodell des BIM integriert wird. Das BIM kann dann anhand der generierten Zeitschiene weitere BIM-Funktionen aktualisieren.

Ferner beschreibt die Schrift WO 2013/006625 A1 ein Verfahren zum Manövrieren eines Krans innerhalb einer Baustelle unter Zuhilfenahme von Daten aus einem BIM-Modell, wobei einerseits globale 3D-Koordinaten des Kranhakens, die mit Hilfe von absoluten Positionssensoren bestimmt werden, und andererseits globale 3D-Koordinaten, die das zu errichtende Bauwerk und die Position der Bauwerksteile charakterisieren und im BIM-Modell abgelegt sind, miteinander abgeglichen werden.

Aus der US 2013/0345857 A1 ist ein Kran bekannt, der Bauwerks-Daten aus einer Datenbank erhält und anhand gemessener Ist-Daten des Bauwerks aktualisiert, wobei der Kran unter Berücksichtigung der Bauwerks-Daten eine Verfahrstrecke für den Lasthaken bestimmt, wobei Anfangs- und Endpunkt über ein Touchscreen eingebbar sind. Weitere Baumaschinen, die mit Bauwerks-Daten aus einer Datenbank arbeiten, sind aus den Schriften US 2013/299440 A1, US 2010/070179 A1, US 2014/218233 A1, EP 30 37 376 A1, US 6 845 311 B1 und US 2016/035251 A1 bekannt.

Im Ergebnis ist der funktionale Zugewinn der bislang vorgesehenen Anbindung eines Krans an das BIM-Modell jedoch begrenzt. Insbesondere konnten bislang keine durchschlagenden Vorteile bei der Steuerung von Baumaschinen wie Kranen oder Baggern und deren Handhabung durch BIM-Modelle erzielt werden. Zudem sind Echtzeitprobleme, die bei der Verwendung von BIM-Daten zur Kransteuerung durch begrenzte Datenübertragungsgeschwindigkeiten und -bandbreiten insbesondere bei zeitsensiblen Steuerungsaufgaben wie der Pendeldämpfung entstehen können, bislang unbefriedigend gelöst.

Der vorliegenden Erfindung liegt daher die Aufgabe zugrunde, eine verbesserte Integration von Baumaschinen und deren Betrieb in Bauwerkdatenmodelle und/oder eine verbesserte Anbindung von Baumaschinen an solche Bauwerkdatenmodelle zu schaffen, die Nachteile des Standes der Technik vermeiden und letzteren in vorteilhafter Weise weiterbilden. Insbesondere soll eine effizientere und sicherere Steuerung von Baumaschinen durch eine verbesserte Anbindung an BIM-Modelle erzielt werden.

Erfindungsgemäß wird die genannte Aufgabe durch eine Baumaschine gemäß Anspruch 1 sowie ein Verfahren zu deren Steuerung gemäß Anspruch 20 gelöst. Bevorzugte Ausgestaltungen der Erfindung sind Gegenstand der abhängigen Ansprüche.

Es wird also nach einem Aspekt der Erfindung vorgeschlagen, die Steuerung einer auf der Baustelle verwendeten Baumaschine an einen Baustellenleitrechner anzubinden, der Zugriff auf das Bauwerkdatenmodell bzw. das BIM besitzt, so dass die Baumaschinen-Steuervorrichtung, bspw. die Kran-Steuerung, mit dem Bauwerkdatenmodel Daten austauschen kann. Erfindungsgemäß besitzt die Baumaschine ein mit dem Baustellenleitrechner verbindbares Datenaustauschmodul zum Austauschen von digitalen Daten mit dem Baustellenleitrechner, wobei das Datenaustauschmodul Lese- und/oder Schreibmittel zum lesenden und/oder schreibenden Zugreifen auf den Baustellenleitrechner besitzt. Insbesondere kann anhand digitaler Informationen aus dem Bauwerkdatenmodell in die Steuerung der Baumaschine eingegriffen und/oder die Steuerung der Baumaschine parametrisiert und/oder modifiziert werden. Alternativ oder zusätzlich kann die Baumaschinen-Steuervorrichtung Daten an den Baustellenleitrechner übertragen, um das Bauwerkdatenmodel zu aktualisieren und/oder zu ergänzen und/oder allgemein digitale Daten an das Bauwerkdatenmodel zu übertragen und dort zu speichern.

Die Anbindung der Steuervorrichtung der Baumaschine an den Baustellenleitrechner und das davon bereitgestellte Bauwerkdatenmodell kann grundsätzlich für verschiedene Funktionen des Baumaschinenbetriebs und des Baustellenmanagements genutzt werden. Insbesondere kann die Bereitstellung digitaler Daten aus dem Bauwerkdatenmodell an die Steuervorrichtung der Baumaschine dazu genutzt werden, verschiedene Arbeitsprozesse der Baumaschine semi-automatisch oder vollautomatisch auszuführen, insbesondere bestimmte Verfahrvorgänge der Baumaschine und/oder das Versetzen von Bauteilen durch die Baumaschine.

Der Baustellenleitrechner, der Zugriff auf das Bauwerkdatenmodell besitzt, kann insbesondere digitale Ortsinformationen über ein zu verbauendes Bauteil bereitstellen, insbesondere wo und wann ein bestimmtes Bauteil angeliefert wird, wo sich ein bestimmtes Bauteil befindet und/oder an welcher Stelle des Bauwerks ein jeweiliges Bauteil verbaut werden soll. Greift beispielsweise die Steuervorrichtung eines Krans auf solche digitale Informationen betreffend das zu verbauende Bauteil zu, können bestimmte Kranbewegungen und/oder Hubbewegungen des Bauteils zumindest teilweise automatisiert ausgeführt werden.

In Weiterbildung der Erfindung kann die Steuervorrichtung der Baumaschine und/oder der Baustellenleitrechner ein Bauteil-Lokalisierungs-Modul beispielsweise in Form eines Softwarebausteins umfassen, mittels dessen ein von der Baumaschine aufzunehmendes Bauteil auf der Baustelle anhand von digitalen Informationen aus dem Bauwerkdatenmodell lokalisiert werden kann. In dem BIM bzw. Bauwerkdatenmodell können beispielsweise Lagerorte oder die Anlieferungsstation und der Anlieferungszeitpunkt gespeichert sein, wobei die Baumaschine bzw. der Kran mit seinem Lastaufnahmemittel dann, wenn das Bauteil gemäß dem Zeitplan, der in dem BIM gespeichert ist, verbaut werden soll, zu der Lager- bzw. Anlieferposition des Bauteils zumindest teilweise automatisiert verfahren werden kann. Dies kann beispielsweise dergestalt erfolgen, dass auf einem Display der Baumaschine angezeigt wird, dass sich das nächste zu bearbeitende Bauteil an einer bestimmten Position befindet und der Maschinenführer in einem Dialogfeld gefragt wird, ob die Position automatisch angefahren werden soll, was dann ausgeführt werden kann, wenn der Maschinenführer dies bestätigt. Gegebenenfalls kann das Ausführen auch vollautomatisch erfolgen.

In vorteilhafter Weiterbildung der Erfindung kann auch das Aufnehmen eines Bauteils automatisiert erfolgen bzw. vom Baustellenrechner her unterstützt werden.

Insbesondere kann eine Erfassungsvorrichtung zum Erfassen eines im Aufnahme- und/oder Arbeitsbereichs der Baumaschine befindlichen Bauteils vorgesehen sein, wobei die genannte Erfassungsvorrichtung beispielsweise eine Kamera und/oder einen bildgebenden Sensor und/oder einen Barcodescanner und/oder einen RFID-Leser aufweisen kann, um das beispielsweise in der Nähe des Lasthakens eines Krans befindliche Bauteil identifizieren zu können. Erkennt die Erfassungsvorrichtung ein bestimmtes Bauteil beispielsweise anhand eines daran angebrachten Barcodes oder eines davon abgegebenen RFID-Signals, kann die Baumaschinen-Steuervorrichtung anhand von digitalen Daten aus dem Bauwerkdatenmodell, die vom Baustellenrechner bereitgestellt werden, bestimmen, ob es sich um das "richtige" Bauteil für den nächsten Arbeitsschritt handelt und/oder an welchem Abschnitt bzw. Punkt des zu errichtenden Bauwerks das Bauteil zu positionieren bzw. abzusetzen ist.

Alternativ oder zusätzlich zu der genannten RFID-Erkennung kann auch mit einem LWID, d.h. im niederfrequenten bzw. Low Wave-Bereich arbeitenden Kennungssystem gearbeitet werden. Insbesondere kann auch mit einem sogenannten RuBee-Erkennungssystem gearbeitet werden, wobei ein solches RuBee-System bidirektional on demand kommuniziert, wobei beispielsweise in einem Frequenzbereich von größenordnungsmäßig 100-150 kHz, ggf. aber auch höher bis zu 450 kHz gearbeitet werden kann. Derartige RuBee-Tags können einen Mikroprozessor mit einem Speicherbaustein umfassen und eine IP-Adresse verwenden. Insbesondere kann die RuBee-Erkennung auch Magnetwellen verwenden und/oder induktiv kommunizieren, wobei sich die RuBee-Erkennung insbesondere durch ihre Robustheit gegenüber Störungen durch Metallteile und Feuchtigkeit auszeichnet und somit besonders für den Baumaschinen- oder Kraneinsatz geeignet ist.

In vorteilhafter Weiterbildung der Erfindung kann die Steuerung der Baumaschine auch einen Hubsteuerungsbaustein zur automatisierten Hubsteuerung anhand von relevanten Informationen aus dem Bauwerkdatenmodell aufweisen. Der genannte Hubsteuerungsbaustein kann dabei halbautomatisch oder vollautomatisch arbeitend ausgebildet sein, um im Zusammenspiel mit Eingabe oder Freigabe oder Bestätigungsbefehlen des Maschinenführers oder ggfs. auch ohne solche ergänzenden Steuerbefehle einen Hub automatisiert auszuführen. Hierzu kann bei halbautomatischer Ausbildung der Maschinenführer das von der Baumaschine zu verbringende Bauteil identifizieren. Alternativ kann auch eine automatisierte Bauteilerkennung erfolgen, wie zuvor erläutert, um beispielsweise eine am Kranhaken eines Krans aufzunehmende Last zu identifizieren.

Für ein erfasstes und/oder identifiziertes Bauteil kann dann über die Anbindung der Baumaschinen-Steuervorrichtung an den Baustellenleitrechner anhand des Bauwerkdatenmodells und relevanter digitaler Informationen hieraus bestimmt werden, zu welchem Ort des Bauwerks das Bauteil verbracht werden soll, wobei hierfür insbesondere Positionsdaten für das jeweilige Bauteil aus dem Bauwerkdatenmodell genutzt werden können.

Das Hubsteuerungsmodul kann aus den vom Baustellenleitrechner bereitgestellten Daten des BIM betreffend das identifizierte Bauteil und ggfs. weiterer Bauwerkscharakteristika wie Bauwerkskonturen den Verfahrweg für den automatisierten Hub berechnen, ggfs. unter Berücksichtigung von weiteren Topographiedaten der Baustelle wie Zufahrtswegen etcetera.

Alternativ oder zusätzlich zu einem solchermaßen automatisierten Verfahren der Baumaschine durch den genannten Hubsteuerungsbaustein kann auch ein Sperrbaustein vorgesehen sein, der im Zusammenspiel mit dem Bauwerkdatenmodell einen entsprechenden Hub bzw. einen entsprechenden Arbeitsschritt der Baumaschine sperren kann, insbesondere wenn beispielsweise ein entsprechendes Bauteil bereits verbaut wurde oder ein für das Verbauen des Bauteils benötigter Anschlussbaustein noch nicht verbaut wurde.

Der genannte Sperrbaustein kann insbesondere im Zusammenspiel mit der vorgenannten Baufortschrittsüberwachung arbeiten, insbesondere dergestalt, dass anhand des zuvor erläuterten Soll-/Ist-Abgleichs des Baufortschritts ermittelt wird, ob das Bauwerk bereit ist, das jeweilige Bauteil entsprechend zu verbringen. Hierdurch können unnütze Hübe mit Bauteilen vermieden werden, die noch nicht verbaut werden können bzw. deren Einbauposition noch nicht bereit ist.

Der Sperrbaustein und/oder der vorgenannte Hubsteuerungsbaustein können in die Maschinen-Steuerungsvorrichtung integriert und/oder als Software-Tool herunterladbar und/oder einspielbar sein, bspw.von dem Baustellenleitrechner her, oder auch in Form eines gespeicherten, separaten Bausteins an die Maschinen-Steuerungsvorrichtung angebunden werden. Vorteilhafterweise können der Sperrbaustein und/oder der Hubsteuerungsbaustein mittels digitaler Informationen aus dem Bauwerkdatenmodell parametrisiert und/oder modifiziert werden.

Um ein Bauteil zumindest teilweise automatisiert verfahren, d.h. an einem bestimmten Punkt aufnehmen und an einem bestimmten Punkt absetzen zu können, kann die Baumaschinen-Steuervorrichtung bzw. der vorgenannte HubsteuerungsBaustein vorteilhafterweise zumindest dreidimensionale Koordinaten verarbeiten und vom Baustellenrechner erhalten, wobei die vom Baustellenleitrechner bereitgestellten Positionskoordinaten des Lastaufnahmeorts beispielsweise X1, Y1 und Z1 und die Positionskoordinaten des Entladepunkts beispielsweise X2, Y2 und Z2 sein können, also vorteilhafterweise jeweils Aufrisskoordinaten X und Y sowie Höhenkoordinaten Z umfassen können. Das genannte Koordinatensystem XYZ kann beispielsweise ein baustellen- oder bauwerkfestes, d.h. auf das zu errichtende Bauwerk bezogenes Koordinatensystem sein, welches die Be- und Entladepositionen immer relativ zu dem zu errichtenden Bauwerk angibt. Die genannten Koordinaten XYZ können beispielsweise aus dem Bauwerkdatenmodell abgerufen bzw. bereitgestellt werden.

Vorteilhafterweise werden die Belade- und Entladepositionen des jeweiligen Bauteils noch durch zumindest eine weitere Koordinate definiert, nämlich insbesondere eine Winkel- bzw. Ausrichtungskoordinate ϕ, die insbesondere den Drehwinkel bzw. die Winkelausrichtung des Bauteils bezüglich einer aufrechten Achse angeben kann. Wird als Baumaschine ein Kran verwendet, um das Bauteil vom Anlieferungsort zum Verbauort zu verbringen, kann der Kran vorteilhafterweise eine Verdreheinrichtung zum Verdrehen des Lasthakens um eine aufrechte Achse besitzen. Dies kann beispielsweise durch einen Drehantrieb erfolgen, der unmittelbar dem Lasthaken selbst zugeordnet ist, beispielsweise um den Lasthaken gegenüber der Seilflasche zu verdrehen. Alternativ oder zusätzlich kann auch die an einem Kranausleger verfahrbare Laufkatze von einem Laufkatzen-Drehantrieb entsprechend verdreht werden, um das Bauteil in verschiedenen Winkelausrichtungen aufnehmen und absetzen zu können.

Je nach Anlieferungsstation bzw. Waren-Zwischenlager kann die Winkelausrichtung beim Aufnehmen der Last vorgegeben und bekannt sein, beispielsweise aus dem Bauwerkdatenmodell ausgelesen werden, wenn die Ausrichtung dort abgelegt ist. Alternativ oder zusätzlich kann der Kran bzw. die Baumaschine auch mit einer Erfassungseinrichtung zum Erfassen der Winkelausrichtung versehen sein, beispielsweise einer Kamera, mittels derer beispielsweise eine Fertigwand oder ein Stahlträger in ihrer/seiner Ausrichtung bestimmt werden kann. Diese beim Aufnehmen des Bauteils bestimmte Winkelausrichtung ϕ1 kann dann durch Verdrehen des Lasthakens oder der Laufkatze in die gewünschte Winkelausrichtung ϕ2 am Verbauort umgesetzt werden, wobei die benötigte Bauteilausrichtung am Einbauort aus dem Bauwerkdatenmodell ausgelesen werden kann und/oder durch Erfassung der Ausrichtung der bereits verbauten Anschlussbauteile, beispielsweise wiederum mittels einer Kamera, bestimmt werden kann.

Gegebenenfalls können zusätzlich zu der einen Winkelkoordinate ϕ, die die Winkelausrichtung bezüglich einer vertikalen Drehachse bestimmt, weitere Winkelausrichtungskoordinaten verwendet werden, beispielsweise wenn mittels zwei Kranen ein Bauteil wie beispielsweise ein langer Träger gemeinsam gehoben und beispielsweise in einer nicht exakt horizontalen Ausrichtung abgesetzt werden soll.

Um eine Feinjustierung der Position der Baumaschine bzw. dessen Lastaufnahmemittels und/oder des daran aufgenommenen Bauteils in einfacher und günstiger Weise zu ermöglichen, kann die Baumaschinen-Steuervorrichtung über ein Verfahr-Steuer-Modul verfügen, das zumindest ein Bedienelement aufweist, das Betätigungsachsen aufweist, deren Ausrichtung den gewünschten Verfahrachsen entspricht derart, dass ein Bewegen des Bedienelements in eine bestimmte Richtung ein Verfahren der Baumaschine bzw. des Lastaufnahmemittels in die entsprechende Richtung bewirkt und/oder ein Verdrehen des Bedienelements um eine Drehachse ein Verdrehen des Lastaufnahmemittels um eine dazu parallele Drehachse in entsprechender Richtung bewirkt. Das Bedienelement kann beispielsweise ein Joystick sein, der in verschiedene Achsen kippbar ist, um Verfahrbewegungen in die entsprechenden Richtungen zu erzeugen und/oder verdrehbar ist, um ein Verdrehen des Bauteils zu ermöglichen, wie dies zuvor beschrieben wurde. Alternativ oder zusätzlich können Schieber- und/oder Drucktasten und/oder ein Touchscreen, auf dem Fingerbewegungen in bestimmte Richtungen oder Drehungen erfasst werden können, als Bedienelement Verwendung finden.

Vorteilhafterweise ist dieses Verfahr-Steuerungs-Modul bzw. dessen zumindest ein Bedienelement nicht in der Maschinenführerkabine vorgesehen - wo natürlich auch entsprechende Verfahrsteuermittel vorgesehen sein können - , sondern in unmittelbarer Nähe des Lastaufnahmemittels der Baumaschine, beispielsweise unmittelbar am Lasthaken bzw. der den Lasthaken tragenden Umlenkflasche eines Krans. Beispielsweise können am Lasthaken oder einem damit verbundenen Strukturteil auf dessen vier Seiten jeweils Drucktasten angebracht sein, die bei Drücken eine Verfahrbewegung in Richtung der Druckbewegung auslösen, wodurch eine intuitive Feinjustierung der Ausrichtung bzw. Position des Lasthakens ermöglicht wird. Alternativ oder zusätzlich kann ein um eine aufrechte Achse verdrehbarer Drehsteuerungsknopf vorgesehen sein, mittels dessen der Lasthaken oder die Laufkatze um die aufrechte Achse verdreht werden kann, um den vorgenannten Richtungswinkel ϕ einstellen zu können.

Alternativ oder zusätzlich zu einem solchen Feinjustierungs-Positionssteuerungsmodul direkt am Lastaufnahmemittel kann das genannte Verfahr-Steuerungs-Modul auch in Form einer mobilen Steuerungseinheit beispielsweise in Form eines Tablets realisiert sein, das ein am Lastaufnahmemittel befindlicher Maschinenführer mit sich führen kann. Die Orientierung der am Tablet definierten Steuerungsachsen kann mit den Bewegungsachsen der Baumaschine beispielsweise ganz einfach dadurch in Übereinstimmung gebracht werden, dass sich der Maschinenführer selbst bzw. das Tablet in eine vorbestimmte Ausrichtung zur Baumaschine bringt, beispielsweise sich selbst mit dem Rücken zum Kranturm unter dessen Ausleger und/oder das Tablet in eine bestimmte Ausrichtung zum Ausleger des Krans und/oder sich selbst oder das Tablet in eine bestimmte Ausrichtung zu dem Bauwerk, das zu errichten ist und dessen Ausrichtung das Bauwerkdatenmodell natürlich kennt.

Alternativ oder zusätzlich kann eine entsprechende Verfahr- und/oder Ausrichtungs-Steuerungs-Vorrichtung auch an dem zu verfahrenden Bauteil angebracht sein, dessen Position und Ausrichtung letztlich gesteuert werden soll. Beispielsweise kann ein entsprechendes Steuerungstablet zur Feinjustierung an einem gekennzeichneten Montagepunkt am Bauteil positioniert werden, um in der genannten Weise die Feinjustierung bzw. -positionierung vornehmen zu können.

Ein beispielsweise temporäres Anbringen des Verfahr-Steuer-Moduls an dem zu justierenden Bauteil und/oder dem das Bauteil aufnehmenden Lastaufnahmemittel in einer vorbestimmten Ausrichtung hierzu, was beispielsweise durch eine Halterung am Bauteil und/oder Lastaufnahmemittel und/oder eine daran angebrachte Markierung erfolgen kann, ist es gleichzeitig möglich, die Orientierungsachsen des Bedienelements des Verfahr-Steuer-Moduls in passender Weise mit den Bewegungsachsen der Baumaschine zu verknüpfen, da das temporäre Anbringen in vorbestimmter Ausrichtung die Bewegungsachsen des Bedienelements festlegt und eine intuitive Bedienung ermöglicht. Wird beispielsweise ein Tablet in vorbestimmter Ausrichtung an einer Hauptfläche einer Fertigwand positioniert, erkennt die Kransteuerung aus dem Bauwerkdatenmodell und/oder mittels einer geeigneten Sensorik die Ausrichtung der Wand, so dass das Drücken von Rechts-Links-Oben-Unten-Pfeilen oder eine entsprechende Wischbewegung auf dem Tablet in eine Stellbewegung des Krans in die gewünschte Richtung umgesetzt werden kann.

Alternativ oder zusätzlich kann das genannte Verfahr-Steuerungs-Modul bzw. dessen zumindest ein Bedienelement Teil der Ausrüstung, insbesondere Teil eines Kleidungsstücks bzw. eines selbsttragend am Körper befestigbaren Gegenstands des Maschinenführers sein, insbesondere in Form eines sog. Wearable-Elektronikbausteins. Insbesondere kann zur Feinjustierung der Position des Lastaufnahmemittels der Baumaschine ein Handschuh Verwendung finden, der mit einer entsprechenden Sensorik ausgestattet ist. Ein solcher Handschuh kann beispielsweise mit zumindest einem Beschleunigungs- und/oder Richtungssensor versehen sein, der beispielsweise nach oben oder unten winkenden Handbewegungen erfassen kann, um den Lasthaken eines Krans im Sinne einer Gestensteuerung nach oben oder unten zu dirigieren. Alternativ oder zusätzlich kann ein solcher Handschuh auch einen Piezosensor umfassen, der auf Druck reagiert, beispielsweise dergestalt, dass bei Drücken mit einer Außenfläche des Handschuhs der Lasthaken weggedrückt und beim Druck auf eine Handinnenfläche des Handschuhs der Lasthaken in entgegengesetzter Richtung hergezogen wird.

Wie zuvor bezüglich der Variante des Tablets erläutert, kann die Richtung eines Druck- oder Bewegungsbefehls des Handschuhs dabei beispielsweise dadurch erfaßt bzw. bestimmt werden, dass der Handschuh an eine vorbestimmten Stelle des Bauteils angelegt wird, beispielsweise einer Frontseite der zu versetzenden Fertigwand, dessen/deren Ausrichtung die Baumaschinen-Steuervorrichtung aus dem BIM kennt oder mittels einer geeigneten Sensorik, beispielsweise mittels einer vom Kranausleger nach unten blickenden Kamera, erfaßt. Kennt die Steuerungsvorrichtung die Ausrichtung des Bauteils oder des Lastaufnahmemittels, an das der Handschuh angelegt wird, kennt die Steuerungsvorrichtung auch die Ausrichtung des Handschuhs.

Alternativ oder zusätzlich wäre es aber auch möglich, die Orientierung des Handschuhs mittels einer geeigneten Sensorik zu erfassen, bspw. mittels Gyroskopsensoren und/oder Kompasselementen und/oder Neigungssensoren und/oder GPS-Modulen etc., um bestimmte Drucksignale der in den Handschuh integrierten Sensoren in bestimmten Bewegungsrichtungen der zu erzeugenden Stellbewegung zuzuordnen.

Ein solcher Handschuh kann auch mehrere Sensoren, beispielsweise Drucksensoren umfassen, denen verschiedene Bewegungsrichtungen und/oder Steuerfunktionen zugeordnet sind, so dass beispielsweise durch Drücken des an einem Zeigefinger angebrachten Sensors eine andere Verfahrbewegung eingeleitet werden kann als durch das Drücken eines Handflächensensors.

In vorteilhafter Weiterbildung der Erfindung kann das genannte Verfahr-Steuerungs-Modul zur Feinpositionierung der jeweils aufgenommenen Last drahtlos mit der Steuervorrichtung der Baumaschine kommunizieren, wobei beispielsweise eine Funkübertragung der Steuerungssignale vorgesehen sein kann. Alternativ kann aber auch eine Signalkabelübertragung der Steuersignale erfolgen, beispielsweise über das Hubseil, an dem der Lasthaken eines Krans befestigt ist.

Um das am Lastaufnahmemittel der Baumaschine aufgenommene Bauteil sanft und störungsfrei semi- oder vollautomatisch an die gewünschte Einbauposition verfahren zu können, kann in vorteilhafter Weiterbildung der Erfindung eine Pendeldämpfung und/oder Schwingungsdämpfung vorgesehen sein, um ungewollte Pendel- oder Schwingungsbewegung des aufgenommenen Bauteils zu dämpfen und bestenfalls gänzlich zu eliminieren. Ist die Baumaschine beispielsweise ein Kran, kann die Pendeldämpfung ein ungewolltes Pendeln des Lastaufnahmemittels und des daran befestigten Bauteils relativ zum Kranausleger verhindern. Für Krane sind solche Pendeldämpfungsvorrichtungen in verschiedenen Ausführungen bekannt, beispielsweise durch Ansteuerung der Drehwerk-, Wipp- und Laufkatzenantriebe in Abhängigkeit von bestimmten Sensorsignalen, beispielsweise Neigungs- und/oder Gyroskopsignalen. Beispielsweise zeigen die Schriften DE 20 2008 018 260 U1 oder DE 10 2009 032 270 A1 bekannte Lastpendeldämpfungen an Kranen, auf deren Gegenstand insoweit, d.h. hinsichtlich der Ausbildung der Pendeldämpfungs-Einrichtung, ausdrücklich Bezug genommen wird.

Um ein automatisiertes Aufnehmen einer Last am Lastaufnahmemittel der Baumaschine, insbesondere am Lasthaken eines Krans zu ermöglichen, kann das Lastaufnahmemittel in spezieller Weise ausgebildet sein, insbesondere eine selbsttätige und/oder fremdenergiebetätigbare Kupplungseinrichtung und/oder Verriegelungseinrichtung aufweisen. Alternativ oder zusätzlich zu einer solchen Kupplungseinrichtung kann das Lastaufnahmemittel und/oder ein am aufzunehmenden Bauteil angebrachtes Aufnahmestück Zentriermittel zum Zentrieren des Lastaufnahmemittels relativ zu dem am Bauteil angebrachten Gegenstück besitzen, beispielsweise in Form einer konischen Aufnahmeausnehmung und einem damit zusammenwirkenden kegelförmigen Gegenstück.

Alternativ oder zusätzlich kann das automatische Aufnehmen der Last auch durch einen anfahrbaren Anschlag unterstützt bzw. realisiert sein, der das Anfahren und Finden der Kupplungs- bzw. Aufnahmestellung erleichtert.

Insbesondere kann das Lastaufnahmemittel zumindest ein Anschlagelement umfassen, das das Anschlagen und Lösen verschiedener Lasten mit einem zugehörigen, an der Last befestigten oder in die Last integrierten Kupplungselement ermöglicht. Vorteilhafterweise kann das genannte Anschlagelement automatisch durch die Baumaschinen- bzw. Kran-Steuervorrichtung befestigt und/oder gelöst werden. Vorteilhafterweise kann auch ein manuelles Befestigen und Lösen des Anschlagelements erfolgen.

Ein Eingriff in die Baumaschinensteuerung über deren Anbindung an den Baustellenleitrechner kann ferner die Anpassung einer dort implementierten Arbeitsbereichsbegrenzung an Bauwerksdaten aus dem Bauwerkdatenmodell umfassen, wobei vorteilhafterweise eine zeitlich dynamische Anpassung dergestalt erfolgen kann, dass die Arbeitsbereichsbegrenzung an sich ergebende Baufortschritte angepasst werden kann bzw. nach und nach verändert werden kann.

Alternativ oder zusätzlich zu einer solchen automatischen Anpassung der Arbeitsbereichsbegrenzung ist eine Baufortschritt-Überwachung vorgesehen,
bei der mittels einer geeigneten Erfassungseinrichtung wie beispielsweise einer Kamera und/oder einem Scanner der Ist-Zustand des Bauwerks und/oder dessen Umgebung erfasst und mit digitalen Informationen aus dem Bauwerkdatenmodell abgeglichen wird. Zur Erfassung des Ist-Zustands können mit einer Kamera Bauwerkskonturen erfasst und/oder vermessen, und/oder vorhandene Bauteile mittels eines Barcode-Scanners eingelesen und/oder mittels eines RFID-Lesers erfasst, und/oder Positionsdaten von Bauteilen und/oder Bauwerkskonturen mittels eines Ortsbestimmers bspw. in Form eines GPS- oder Radarmeßmoduls bestimmt werden.

Anhand des Vergleichs der erfassten Ist-Daten mit den zugehörigen relevanten BIM-Daten erfolgt eine Bestimmung, in welcher Bauphase sich das Bauwerk aktuell befindet. Anhand dieser Bestimmung der aktuellen Bauphase durch ein entsprechendes Bauphasen-Bestimmungsmodul können dann verschiedene unterstützende und/oder automatisierte Maßnahmen eingeleitet werden. Erfindungsgemäß wird an einer Anzeigevorrichtung der Baumaschine angezeigt, welche Arbeitsschritte als nächstes auszuführen sind und wohin ein an der Anlieferungsstation angeliefertes Bauteil bestimmungsgemäß zu verbringen ist. Dabei wird anhand eingespielter Informationen aus dem Bauwerkdatenmodell auf einer Anzeigeeinheit im Führerstand der Baumaschine eine virtuelle Darstellung des Bauwerks in seinem jeweiligen Zustand generiert, in der das aktuell zu verfahrende bzw. zu verbringende Bauteil und dessen Position angezeigt wird, sodass beispielsweise ein Kranführer sehen kann, welcher Hub zu machen ist und wohin ein am Haken aufzunehmendes Bauteil verbracht werden soll.

Durch Anbindung der Baumaschine bzw. eines die Baumaschine betreffenden Maschinendatenmodells, in dem digitale Informationen über verschiedene Baumaschinenmodelle enthalten sind, an das Bauwerkdatenmodell bzw. das BIM, können Charakteristika der zur Verfügung stehenden Baumaschinen bereits bei der Planung und der Auswahl einer passenden Baumaschine, bspw. ein Kran der passenden Traglastklasse, berücksichtigt werden. Das genannte Maschinendatenmodell kann dabei in Form eines Software-Bausteins oder einer App bereitgestellt werden, der/die eine Schnittstelle zur Kommunikation mit dem Bauwerkdatenmodell besitzt und beispielsweise von einem Server oder einem Software-Store heruntergeladen oder auch auf einem Datenträger gespeichert sein kann.

Vorteilhafterweise kann mittels des Maschinendatenmodells ein automatisches Auswählen einer für die Errichtung und/oder Bearbeitung des jeweiligen Bauwerks geeigneten Baumaschine anhand digitaler Informationen aus dem Bauwerkdatenmodell und aus dem Maschinendatenmodells erfolgen, wobei hierfür ein automatisches Identifizieren und Auslesen von relevanten Informationen aus dem Bauwerkdatenmodell anhand von Kriterien erfolgen kann, die von dem Maschinendatenmodell vorgegeben werden und Maschinendaten betreffen, in denen sich die verschiedenen Baumaschinenmodelle voneinander unterscheiden. Anhand eines automatischen Vergleichens der ausgelesenen Informationen aus dem Bauwerkdatenmodell mit den Maschinendaten verschiedener Baumaschinen aus dem Maschinendatenmodell erfolgt sodann das automatische Auswählen der geeigneten Baumaschine.

Die die genannten Funktionen realisierenden Bausteine können insbesondere in Form von Software-Tools in das Maschinendatenmodell integriert sein, ggfs. aber auch in dem Bauwerkdatenmodell realisiert sein. Bei Integration in das anbindbare Maschinendatenmodell kann die gesamte Funktionalität für das automatische Auswählen der passenden Baumaschine von dem herunterladbaren und/oder einspielbaren Software-Tool, welches das Maschinendatenmodell realisiert, bereitgestellt werden und insofern mit einem BIM bzw. Bauwerkdatenmodell gearbeitet werden, das hierfür lediglich eine entsprechende Schnittstelle benötigt, über die das ergänzende Software-Tool angebunden werden kann.

Die relevanten Informationen aus dem Bauwerkdatenmodell, die für die Auswahl der Baumaschine benötigt werden und von einem Identifikations- und/oder Auslesemodul identifiziert und ausgelesen werden, können verschiedene Bauwerkscharakteristika wie beispielsweise die Bauwerkshöhe, das Gewicht des schwersten zu versetzenden Bauteils, die Fläche und/oder die Querschnittserstreckung des Bauwerks im Aufriss und/oder die maximale Entfernung zwischen einer im BIM abgelegten Bauteilanlieferungsstation und einem Bauteilbestimmungsort, an dem das jeweilige Bauteil verbaut werden soll, umfassen. Diese identifizierten und ausgelesenen Bauwerkscharakteristika können von einem Vergleichsmodul dann mit relevanten Informationen aus dem Maschinendatenmodell verglichen werden, wobei die relevanten Maschineninformationen insbesondere folgende Informationen umfassen können: Maschinenhubhöhe, maximale Maschinentraglast und/oder Maschinenreichweite. Soll beispielsweise ein für das Bauwerk geeigneter Kran ausgewählt werden, kann ein Kran gewählt werden, dessen Hubhöhe für die Bauwerkshöhe ausreicht, dessen Traglast für das Gewicht des schwersten zu versetzenden Bauteils ausreicht und dessen Reichweite für die Querschnittserstreckung des Bauwerks im Aufriss und/oder die maximale Entfernung zwischen der Bauteilanlieferungsstation und dem Bauteilbestimmungsort ausreicht. Sind im Maschinendatenmodell mehrere Krane enthalten, die die genannten Kriterien erfüllen, kann der kleinste Kran ausgewählt werden, der die genannten Anforderungen erfüllt und sozusagen den kleinsten Überschuß hinsichtlich der Kranleistungen besitzt.

Gemäß einem weiteren Aspekt der vorliegenden Erfindung kann die Anbindung des Maschinendatenmodells an das Bauwerkdatenmodell auch dazu genutzt werden, um den Aufstellort der Baumaschine, insbesondere die Position des Krans, relativ zu dem zu errichtenden bzw. zu bearbeitenden Bauwerk automatisch zu bestimmen und/oder automatisch zu überprüfen. Ist eine Baumaschine ausgewählt, was in der vorgenannten Weise automatisiert durch das beschriebene Auswahlmodul oder alternativ auch händisch vom Planer selbst erfolgen kann, kann ein Positionsbestimmungsmodul anhand relevanter Maschinendaten, die aus dem Baumaschinenmodell ausgelesen werden und beispielsweise die Reichweite und/oder die Hubhöhe und/oder den Kollisions- und/oder Arbeitsbereich der Baumaschine umfassen können, sowie anhand relevanter Bauwerksdaten, die aus dem Bauwerksdatenmodell ausgelesen werden und beispielsweise Bauwerksbemaßungen und/oder -konturen und/oder Baustellen-Topographiedaten und/oder Zufahrtswege und/oder Material-Anlieferungsstationen umfassen können, automatisch einen geeigneten Aufstellort für die Baumaschine bestimmen. Alternativ oder zusätzlich kann das genannte Positions- oder Aufstellort-Bestimmungsmodul eine eventuell händisch vom Planer festgelegten Position der Baumaschinen anhand der genannten Kriterien überprüfen, insbesondere dahingehend, ob bei dem bestimmten Aufstellort die Reichweite bzw. der Arbeitsort der Baumaschine für die von der Baumaschine auszuführenden Arbeiten ausreichend ist und/oder ob Kollisionen des Arbeitsbereichs der Baumaschine mit Bauwerkskonturen und/oder anderen topografischen Gegebenheiten der Baustelle wie beispielsweise Bäumen oder Nachbargebäuden auftreten, um dann ggfs. den Aufstellort der Baumaschine freizugeben oder einen alternativen Aufstellort vorzuschlagen.

Nach erfolgreicher Bestimmung und/oder Überprüfung des Maschinenaufstellorts kann das BIM bzw. Bauwerkdatenmodell von dem genannten Aufstellort-Bestimmungsmodul bezüglich des Aufstellorts entsprechend aktualisiert werden.

In Weiterbildung der Erfindung kann das Aufstellort-Bestimmungsmodul anhand der vorgenannten Kollisionsprüfung auch automatisch den Arbeitsbereich der jeweils ausgewählten Baumaschine automatisch begrenzen und das Bauwerkdatenmodell durch die festgelegten Arbeitsbereichsbeschränkungen aktualisieren. Wie noch erläutert wird, kann die Baumaschinen-Steuervorrichtung hinsichtlich einer Arbeitsbereichsbegrenzungs-Funktion entsprechend angepaßt bzw. parametrisiert werden.

Die Erfindung wird nachfolgend anhand eines bevorzugten Ausführungsbeispiels und zugehörigen Zeichnungen näher erläutert. In den Zeichnungen zeigen:

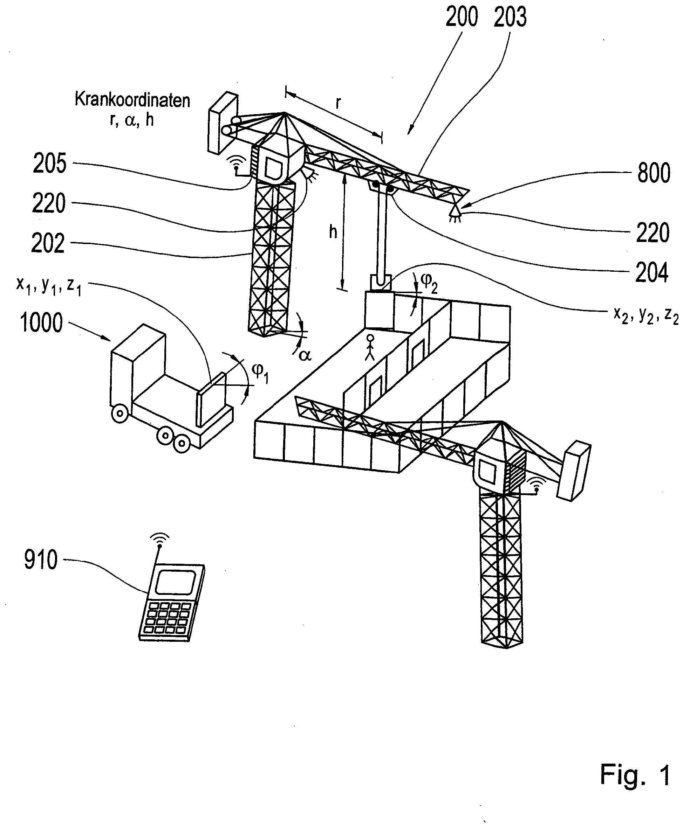

- Fig. 1:: eine schematische Darstellung einer Baumaschine in Form eines Krans, deren Steuerung an einen Baustellenleitrechner, der Zugriff auf ein Bauwerkdatenmodell hat, angebunden ist und automatisiert eine Last von einem anliefernden Lkw zu einer Einbauposition am zu errichtenden Gebäude manövriert,

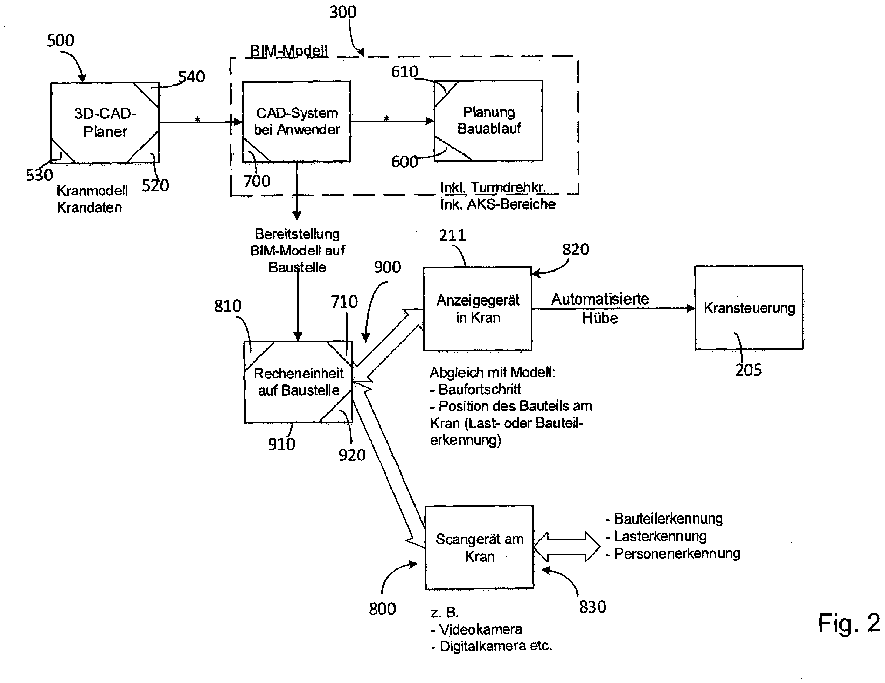

- Fig. 2:: eine schematische, strukturelle Darstellung der Anbindung der Steuerung des Krans aus Fig. 1 an das Bauwerkdatenmodells über den genannten Baustellenleitrechner, sowie der Anbindung eines Maschinendatenmodells, das Charakteristika des Krans enthält, an das Bauwerkdatenmodell zur Unterstützung der Bauplanung,

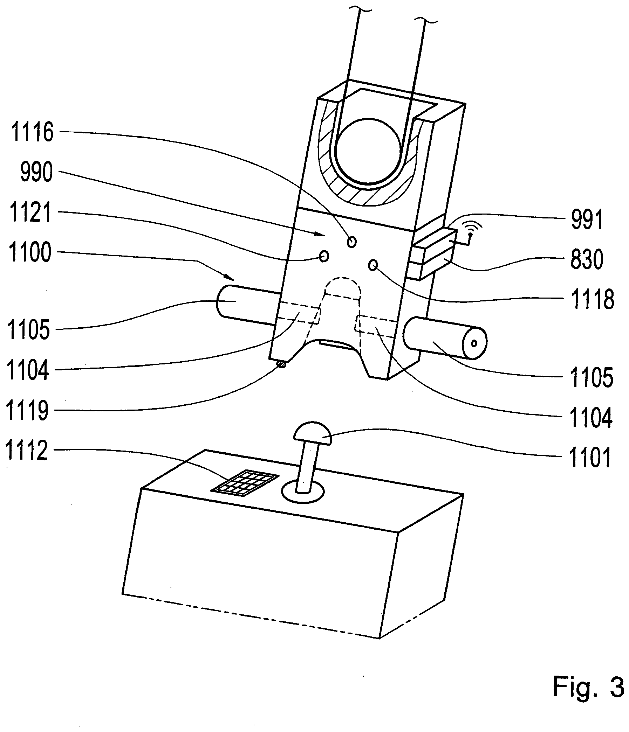

- Fig. 3:: eine schematische, perspektivische Darstellung eines Lastaufnahmemittels des Krans aus Fig. 1 zum Aufnehmen eines Bauteils mittels einer Kupplung, wobei der lasthakenseitige Kupplungsteil und der bauteilseitige Kupplungsteil in einer noch nicht gekuppelten Annäherungsstellung gezeigt sind, und

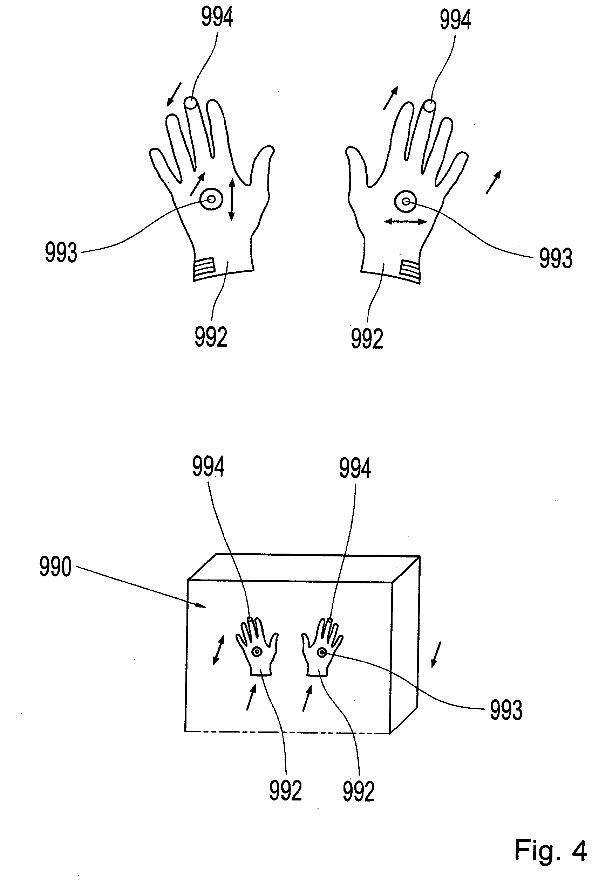

- Fig. 4:: eine schematische Darstellung eines elektronischen Feinsteuermoduls in Form eines als Handschuh ausgebildeten elektronischen Wearable-Bausteins zum Fein-Dirigieren von Lasthaken-Bewegungen des Krans aus Fig. 1 durch händisches Drücken am zu verfahrenden Bauteil.

Wie Fig. 1 zeigt, kann ein Kran 200, der in noch zu erläuternder Weise an ein Bauwerkdatenmodell 300 angebunden ist, als Turmdrehkran ausgebildet sein, dessen Turm 202 einen Ausleger 203 trägt, an dem eine Laufkatze 204 verfahrbar gelagert ist. Der Ausleger 203 kann zusammen mit dem Turm 202 oder auch ohne den. Turm 202 - je nach Ausbildung des Krans als Oben- oder Untendreher - um eine aufrechte Achse verdreht werden, wozu in an sich bekannter Weise ein Drehwerksantrieb vorgesehen ist. Der Ausleger 203 könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze 204 kann in an sich ebenfalls bekann-, ter Weise mittels einer Katzfahrwinde oder eines anderen Katzfahrantriebs verfahren werden.

Anstelle des gezeigten Krans 200 könnte jedoch auch ein anderer Kran beispielsweise in Form eines Teleskopauslegerkrans oder auch eine Baumaschine eines anderen Typs wie beispielsweise ein Bagger Verwendung finden und an das BIM bzw. Bauwerkdatenmodell 300 angebunden werden.

Wie Fig. 2 zeigt, kann der Kran 200 bereits in der Planungsphase berücksichtigt werden. Hierzu kann ein Baumaschinenmodell 500, das in der genannten Weise digitale Informationen über verschiedene Baumaschinen, insbesondere verschiedene Krane einschließlich des Krans 200 aus Fig. 1 enthalten kann, an das Bauwerkdatenmodell 300 angebunden werden. Das genannte Baumaschinenmodell 500 kann in Form eines herunterladbaren Software- Tools bzw. -Bausteins bereitgestellt werden, der eine Schnittstelle aufweist, die es erlaubt, das Baumaschinenmodell 500 an das Bauwerkdatenmodell 300 anzubinden, sodass die beiden miteinander kommunizieren und Daten austauschen können.

Mit Hilfe der Anbindung des genannten Maschinendatenmodells 500 kann der Planungsprozess vereinfacht werden. Insbesondere können in der eingangs näher erläuterten Weise die Auswahl des Krans, die Positionierung des Krans relativ zu dem zu erstellenden Bauwerk und die Arbeitsbereiche des Krans 200 vorgenommen bzw. bestimmt werden. Hierzu können in das Baumaschinenmodell 500 und/oder in das Bauwerkdatenmodell 300 geeignete Software- und/oder Hardwarebausteine integriert sein, insbesondere ein Maschinen-Auswahlmodul 520, ein Aufstellort-Bestimmungsmodul 530, ein Kollisions-Bestimmungsmodul 700 und ein Arbeitsbereichs-Einstellmodul 710.

Wie Fig. 2 zeigt, ist auch der Kran 200 selbst an das Bauwerkdatenmodell 300 angebunden, und zwar über einen Baustellenleitrechner 910, der Zugriff auf das genannte Bauwerkdatenmodell hat. Um das BIM bzw. das Bauwerkdatenmodell 300 auf der Baustelle bereitzustellen, kann der Baustellenleitrechner 910, der auf der Baustelle bzw. im Bereich des zu errichtenden Bauwerks positioniert werden kann, online an einen Server angebunden sein, auf dem das BIM bzw. Bauwerkdatenmodell 300 bereitgestellt ist. Vorteilhafterweise kann auf dem Baustellenleitrechner aber auch eine lokale Kopie des BIM bzw. Bauwerkdatenmodells 300 abgespeichert sein, die zyklisch oder laufend mit der originären Fassung des Bauwerkdatenmodells 300 synchronisiert werden kann. Hierdurch können lange Datenwege und Zeitversatz reduziert werden und eine zeitversatzfreie bzw. -arme Interaktion zwischen dem Bauwerkdatenmodell 300 und dem Kran 200 realisiert werden, da die Kran-Steuervorrichtung 205 direkt auf den Baustellenleitrechner 910 und die dortige lokale Kopie des Bauwerkdatenmodells 300 zugreifen kann, ohne dass eine Datenfernübertragung zu einem entfernten, zentralen BIM-Server mit eventuellen Bandbreitenbeschränkungen notwendig wäre. Letzteres wäre natürlich gleichwohl möglich.

Werden vom Kran 200 bzw. dessen Steuervorrichtung 205 her Daten in das Bauwerkdatenmodell 300 geschrieben, können diese zunächst im Baustellenleitrechner 910 zwischengespeichert werden, wobei dann durch Synchronisieren des Baustellenleitrechners 910 mit einem Zentralserver und/oder Rechner- und Servereinheiten anderer Beteiligter wie bspw. eines Planungsbüros oder eines Maschinenverleihers, die dortigen Versionen des Bauwerkdatenmodells 300 entsprechend aktualisiert werden können.

Durch die Anbindung des Krans 200 an den Baustellenleitrechner 910 bzw. an das davon bereitgestellten Bauwerkdatenmodell 300 können verschiedene Kranfunktionen bzw. allgemein Steuerungsfunktionen der entsprechenden Baumaschine in Abhängigkeit digitaler Daten aus dem Bauwerkdatenmodell 300 angepasst bzw. parametrisiert werden. Hierzu können mittels der in Fig. 2 gezeigten Datenkommunikationseinrichtung 900 entsprechende digitale Informationen aus dem Bauwerkdatenmodell 300 an den Kran 200 gegeben werden. Die genannte Datenkommunikationseinrichtung 900 verbindet insbesondere den Baustellenrechner 910 mit der Steuerungsvorrichtung 205 des Krans 200.

Ein Steuerungs-Konfigurationsmodul 920, das in der Steuervorrichtung 205 des Krans 200 implementiert sein kann, aber auch in dem Baustellenrechner 910 vorgesehen sein kann, ist dazu vorgesehen, die genannten Steuerungsfunktionen der Steuervorrichtung 205 des Krans 200 entsprechend anzupassen. Insbesondere kann dieses Steuerungs-Konfigurationsmodul 920 die Arbeitsbereichsbegrenzungs-Funktion des Krans 200, die in dessen Steuervorrichtung 205 implementiert sein kann, mittels digitaler Daten aus dem Bauwerkdatenmodell 300 an verschiedene Bauphasen und dementsprechend wachsende Bauwerkswände und Hindernisse anpassen.

Unabhängig von einer solchen Anpassung der Arbeitsbereichsbegrenzung kann die Anbindung des Krans an den Baustellenleitrechner 910 und das davon bereitgestellte Bauwerkdatenmodell 300 auch dazu genutzt werden, eine automatisierte Bauphasenüberwachung zu realisieren. Hierzu kann einerseits mittels einer geeigneten Erfassungseinrichtung 800 der Ist-Zustand des Bauwerks bestimmt werden, wobei die genannte Erfassungseinrichtung 800 grundsätzlich verschieden ausgebildet sein kann. Beispielsweise kann die Erfassungseinrichtung 800 zumindest eine Kamera und/oder einen geeigneten bildgebenden Sensor umfassen, beispielsweise in Form einer am Kran 200 montierten Kamera 220. Eine den erzeugten Bildern nachgeordnete Bildverarbeitungseinrichtung kann spezifische Charakteristika erfassen, beispielsweise Bauwerkshöhe, bebaute Grundrissfläche, Umrisskonturen oder ähnliches, welche den Baufortschritt charakterisieren. Alternativ oder zusätzlich zu solchen Kameras oder bildgebenden Sensoren können auch andere Erfassungsmittel wie beispielsweise ein Scanner oder ein RFID-Leser vorgesehen sein, um zu erfassen, ob bestimmte Bauteile bereits am Bauwerk verbaut sind oder nicht. Ein solcher Scanner oder RFID-Leser kann beispielsweise am Kranhaken 208 angebracht sein, oder auch in Form eines mobilen Geräts verwendet werden, mittels dessen verbaute Bauteile händisch gescannt werden können.

Der durch die Erfassungseinrichtung 800 erfasste Ist-Zustand des Bauwerks wird dann durch ein Bauphasen-Bestimmungsmodul 810, das beispielsweise in dem Baustellenrechner 910 implementiert sein kann, mit digitalen Informationen aus dem Bauwerkdatenmodell 300 verglichen, um aus dem Vergleich die jeweilige Bauphase zu bestimmen.

Auf Basis der bestimmten Bauphase kann der Kran 200 verschiedene Funktionen ausführen. Beispielsweise ist es bereits hilfreich, wenn die jeweils erreichte Bauphase auf einer Anzeigevorrichtung am Kran 200 angezeigt wird, sei es in dessen Kranführerkabine 206 oder am Steuerstand 2 der Fernsteuereinrichtung.

Mit Hilfe eines Steuerungs-Konfigurationsmoduls 920, das in dem Baustellenrechner 910, insbesondere aber auch in der Steuervorrichtung 205 des Krans 200 implementiert sein kann, können jedoch auch weitergehende Steuerungsfunktionen am Kran 200 adaptiert werden. Beispielsweise kann am genannten Anzeigegerät am Kran oder dessen Fernsteuervorrichtung eine virtuelle Darstellung der jeweils nächsten von der Baumaschine auszuführenden Arbeitsaufgabe angezeigt werden, beispielsweise dergestalt, dass in die virtuelle Darstellung des Bauwerks in dessen jeweiliger Bauphase das jeweils nächste zu verbauende Bauteil angezeigt und dessen Einbauposition am Bauwerk eingeblendet wird. Alternativ oder zusätzlich kann auch ein Verfahrweg in die Darstellung eingeblendet werden.

In noch vorteilhafterer Weise können auch automatisierte Hübe durch den Kran 200 ausgeführt werden, insbesondere auf Basis der vorgenannten Bauphasenüberwachung und der damit einhergehenden Bestimmung des nächsten Arbeitsschrittes.

Wird beispielsweise mittels eines Lkws 1000 auf der Baustelle ein Bauteil angeliefert, was beispielsweise durch entsprechende Eingabe dem Bauwerkdatenmodell 300 oder dessen Zeitplan zu entnehmen ist, kann der Baustellenleitrechner 910 die Steuervorrichtung 205 des Krans 200 informieren, insbesondere auch über die Entladeposition, an der der Lkw 1000 bestimmungsgemäß zum Entladen des Bauteils hält. Fig. 1 zeigt hierzu die Koordinaten X1, Y1 und Z1, die die Position des Bauteils am Entladeort des Lkws 1000 angeben. Zusätzlich bestimmt der in Fig. 1 gezeigte Winkel ϕ1 die Winkelausrichtung des Bauteils relativ zu dem zu errichtenden Bauwerk, was beispielsweise in einfacher Weise dadurch vorgegeben werden kann, dass der Lkw eine vorbestimmte Abladeposition einnehmen muss, die das BIM 300 kennt, und das Bauteil auf dem Lkw 1000 in bestimmter Ausrichtung gelagert ist. Alternativ oder zusätzlich kann eine geeignete Erfassungseinrichtungbeispielsweise in Form einer Kamera 220 vorgesehen sein, die beispielsweise am Ausleger 203 des Krans 200 angebracht und nach unten blicken kann, um somit die Ausrichtung des Bauteils mittels einer Bildauswerteeinheit bestimmen zu können..

Informiert der Baustellenleitrechner 910 die Steuervorrichtung 205 des Krans 200 über die Anlieferung, kann die Steuervorrichtung 205 den Kran 200 so verfahren, dass dessen Lasthaken zu dem Lkw 1000 und dem darauf befindlichen Bauteil bewegt wird.

Vorteilhafterweise kann der Lasthaken des Krans 200 über selbsttätige Kupplungsmittel verfügen, beispielsweise dergestalt, dass der Lasthaken gegen einen Anschlag gefahren wird, an dem eine Lastaufnahme am Bauteil mit dem Lasthaken kuppelt, wie noch näher elräutert wird. Alternativ oder zusätzlich kann die Feinjustierung des Lasthakens relativ zum aufzunehmenden Bauteil auch in der eingangs schon näher erläuterten Weise durch ein am Lasthaken befindliches Verfahr-Steuerungs-Modul 990 erfolgen, welches eine für den Ankuppelvorgang verantwortliche Position am Lkw 1000 bzw. auf dessen Ladefläche betätigen kann, wenn der Lasthaken des Krans 200 automatisiert die Position X1, Y1, Z1, ϕ1 angefahren hat.

Dabei können Erfassungsmittel am Lasthaken auch überprüfen, ob das am Lkw befindliche Bauteil tatsächlich das zu verbauende Bauteil ist, in dem beispielsweise eine RFID-Kennung, ein Barcode oder Ähnliches eingelesen wird, wie eingangs schon näher erläutert.

Hierzu kann eine Erfassungseinrichtung 830 vorgesehen sein, mittels derer ein im Aufnahme- bzw. Arbeitsbereich des Krans 200 befindliches Bauteil erfasst werden kann, insbesondere dahingehend, ob es das Bauteil ist, das im nächsten Arbeitsschritt verbaut werden soll. Die genannte Erfassungsvorrichtung 830 kann beispielsweise einen Barcode-Scanner oder einen RFID-Leser umfassen, der am Kranhaken angebracht sein kann. Es versteht sich jedoch, dass auch andere Erfassungsmittel verwendet werden können, um das aufzunehmende Bauteil zu identifizieren.

Wird auf diese Weise festgestellt, dass das im nächsten Arbeitsschritt zu verbauende Bauteil am Kranhaken 208 aufgenommen ist, kann das genannte Steuerungs-Konfigurationsmodul 920 die Kransteuervorrichtung 205 auf Basis der digitalen Informationen aus dem Bauwerkdatenmodell 300 dazu veranlassen, einen automatisierten Hub auszuführen, um das Bauteil an den bestimmungsgemäßen Verbauort zu verbringen, insbesondere an die Verbauposition X2, Y2, Z2 mit der dort benötigten Winkelausrichtung ϕ2. Hierzu kann der Kran 200 verdreht und dessen Laufkatze verfahren sowie ebenfalls verdreht werden.

Fig. 3 zeigt beispielhaft ein Lastaufnahmemittel 1100 des Krans 200, das ein automatisches Ankuppeln der Last ermöglicht. Beispielsweise kann das Lastaufnahmemittel 1100 in Form einer formschlüssigen Kupplung ausgebildet sein, die ein dazu passend ausgebildetes Greifelement 1101 am Bauteil, beispielsweise einen pilzkopfförmigen Greifkopf, formschlüssig greifen kann. Wie Fig. 3 zeigt, können den Kupplungselementen, beispielsweise in Form von Schiebern 1104, Aktoren zum Betätigen, insbesondere Öffnen und/oder Schließen zugeordnet sein, wobei die genannten Aktoren 1105 fremdenergiebetätigt beispielsweise von der Kransteuerung her betätigt werden können, andererseits aber vorteilhafterweise auch manuell betätigt werden können.

Das genannte Lastaufnahmemittel 1100 kann zur Feinpositionierung eine Sensorik 1119 aufweisen, mittels derer am Bauteil angebrachte Markierungselemente 1112 erfasst werden können. Die genannten Erfassungsmittel 1119 können zusammen mit den Markierungen 1112 am Bauteil ein vollautomatisiertes, feines Anfahren der Kupplungsposition bzw. Lastaufnahmeposition erreichen.

Alternativ oder zusätzlich kann jedoch auch in der eingangs schon erläuterten Weise mit dem Verfahr-Steuerungs-Modul 990 am Lasthaken bzw. -aufnahmemittel 1100 gearbeitet werden, um das Lastaufnahmemittel 1100 exakt in die gewünschte Position und Ausrichtung zu verfahren. Fig. 3 deutet einige Bedienelemente 1116, 1118 und 1121 an, mittels derer in der eingangs schon erläuterten Weise Lasthaken bzw. -aufnahmemittel-Bewegungen fein justiert werden können. Die genannten Bedienelemente 1116, 1118 und 1121 können beispielsweise Drucktasten, Schieber oder Drehknöpfe sein, deren Bewegungsachsen ensprechende Kranhaken-Stellbewegungen und deren Richtungen vorgeben. Wie Fig. 3 zeigt, kann das Verfahr-Steuerungs-Modul 990 eine Sende- und/oder Empfangseinheit 991 aufweisen, um mit der Steuervorrichtung 205 des Krans zu kommunizieren.

Wie Fig. 4 zeigt, kann das genannte Verfahr-Steuerungs-Modul 990 auch Bedienelemente umfassen, die in Handschuhe eines Maschinenbedieners integriert sind. Beispielsweise können solche Handschuhe 992 druck- und/oder richtungsempfindliche Sensoren 993 und 994 umfassen, die in Fingerkuppen oder -spitzen und der Handfläche des jeweiligen Handschuhs 992 integriert sein können.

Werden mit den Handschuhen 992 Oberflächen des zu verfahrenden Bauteils und/oder Oberflächen des Lastaufnahmemittels 1100 berührt, kann mittels der genannten Sensoren 993 und 994 erfasst werden, in welche Richtung die Handschuhe 992 am Bauteil bzw. am Lastaufnahmemittel drücken, ziehen oder drehen, um dann über die Steuervorrichtung 205 des Krans entsprechende Verfahrbewegungen auszuführen. Gegebenenfalls können am Lastaufnahmemittel 1100 und/oder am zu verfahrenden Bauteil mit den Handschuhen 992 zusammenwirkende Oberflächenteile angebracht sein, die die Druckrichtung und/oder Bewegungsrichtung zusammen mit den Sensoren 992 und 993 und 994 besser erfassen lassen. Alternativ oder zusätzlich kann an dem zu verfahrenden Bauteil auch eine Positionsmarkierung angebracht sein, die die Berührungs- bzw. Greifposition der Handschuhe 992 vorgibt, so dass die Steuervorrichtung - aus der Bauteilausrichtung - weiß, in welche Richtung die Handschuhe 992 und deren Sensoren 993 und 994 arbeiten.

Insbesondere können den verschiedenen Sensoren 993 und 994 der Handschuhe 992 auch verschiedenen Funktionen zugeordnet sein. Wie Fig. 4 zeigt, kann beispielsweise dem Handflächensensor 992 des rechten Handschuhs die Funktion "Horizontales Verfahren von rechts nach links" zugeordnet sein, während dem Handflächensensor 992 des linken Handschuhs die Funktion "Vertikales Verfahren" zugeordnet sein kann. Um ein Verfahren senkrecht zur Berührungsebene - entsprechend der Zeichenebene der Fig. 4 - steuern zu können, kann beispielsweise der Fingersensor 994 des linken Handschuhs ein Heranfahren an den Bediener und der Fingersensor 994 des rechten Handschuhs 992 ein Wegfahren signalisieren. Andere Belegungen der Sensoren sind selbstverständlich möglich.

Wie Fig. 2 andeutet, können mittels geeigneter Scangeräte bzw. Erfassungsvorrichtungen auch andere Erkennungsfunktionen realisiert werden, beispielsweise einer Personenerkennung, insbesondere dahingehend, ob Personen sich im beabsichtigten Last-Verfahrweg eines automatisierten Hubs befinden.

## Patentansprüche

1. Baumaschine, insbesondere Kran (200) oder Bagger, mit einer Baumaschinen-Steuervorrichtung (205) zum Steuern von Arbeitsaggregaten der Baumaschine, mit einer mit einem Baustellenleitrechner (910) verbindbaren Datenkommunikations-Einrichtung (900) zum Empfangen und Verarbeiten von digitalen Informationen aus einem Bauwerkdatenmodell (300), auf das der Baustellenleitrechner (910) Zugriff hat, und einem Steuerungs-Konfigurationsmodul (920) zur Beeinflussung zumindest einer Steuerungsfunktion der Baumaschinen-Steuereinrichtung (205) in Abhängigkeit der empfangenen digitalen Informationen aus dem Bauwerkdatenmodell (300), wobei zumindest eine Erfassungseinrichtung (800) zum Erfassen eines Ist-Zustand des Bauwerks, insbesondere das Vorhandensein bestimmter Bauwerksteile, vorgesehen ist, wobei ein Bauphasen-Bestimmungsmodul (810) zum Vergleichen des erfassten Ist-Zustands des Bauwerks mit digitalen Informationen aus dem Bauwerkdatenmodell (300) und Bestimmen der Bauphase in Abhängigkeit des Vergleichs vorgesehen ist, wobei die Datenkommunikations-Einrichtung (900) dazu ausgebildet ist, bestimmte digitale Informationen aus dem Bauwerkdatenmodell (300) in Abhängigkeit der bestimmten Bauphase an die Baumaschinen-Steuervorrichtung (205) bereitzustellen,
**dadurch gekennzeichnet,**
**dass** das Steuerungs-Konfigurationsmodul (920) dazu ausgebildet ist, in Abhängigkeit der bestimmten digitalen Informationen aus dem Bauwerkdatenmodell (300), die der Baumaschine in Abhängigkeit des bestimmten Baufortschritts bereitgestellt werden, auf einer Anzeigevorrichtung (820; 211), die an der Baumaschine oder einem Steuerstand zum Fernsteuern der Baumaschine angeordnet ist, eine virtuelle Darstellung des Bauwerks gemäß dem bestimmten Ist-Zustand und eine virtuelle Darstellung der nächsten von der Baumaschine auszuführenden Arbeitsaufgabe anzuzeigen, sowie in Abhängigkeit des bestimmten Ist-Zustands des Bauwerks in der virtuellen Darstellung des Bauwerks eine virtuelle Darstellung des nächsten zu bearbeitenden Bauteils anzuzeigen und dessen Einbauposition am Bauwerk einzublenden.

2. Baumaschine nach dem vorhergehenden Anspruch, wobei ein Bauteil-Lokalisierungs-Modul (950) zum Lokalisieren eines von der Baumaschine aufzunehmenden Bauteils auf der Baustelle anhand von digitalen Informationen aus dem Bauwerkdatenmodell (300) des Baustellenleitrechners (910) vorgesehen ist, wobei die Baumaschinen-Steuervorrichtung (205) ein Anfahrmodul zum automatisierten Anfahren des solchermaßen lokalisierten Bauteils anhand von durch den Baustellenleitrechner (910) bereitgestellten Positionskoordinaten des Bauteils aufweist.

3. Baumaschine nach einem der vorhergehenden Ansprüche, wobei eine Erfassungsvorrichtung (830), insbesondere umfassend eine Kamera (210) und/oder einen bildgebenden Sensor und/oder einen Barcodescanner und/oder einen RFID-Leser, zum Erfassen und/oder Identifizieren eines im Aufnahme- und/oder Arbeitsbereich der Baumaschine befindlichen Bauteils vorgesehen ist, wobei die Datenkommunikations-Einrichtung (900) dazu ausgebildet ist, in Abhängigkeit des erfassten und/oder identifizierten Bauteils aus dem Bauwerkdatenmodell (300) digitale Informationen betreffend die Bearbeitung des erfassten Bauteils der Baumaschinen-Steuervorrichtung (205) bereitzustellen, wobei das Steuerungs-Konfigurationsmodul (920) dazu ausgebildet ist, einen Bearbeitungsschritt betreffend das erfasste Bauteil auf Basis der vom Bauwerkdatenmodell (300) bereitgestellten digitalen Informationen automatisch auszuführen, wobei die digitalen Informationen aus dem Bauwerkdatenmodell (300) Positionsdaten, die den Bestimmungsort des Bauteils angeben, und/oder Verfahrwegsdaten, die den Verfahrweg des Bauteils angeben, umfassen, wobei das Steuerungs-Konfigurationsmodul (920) dazu ausgebildet ist, die Baumaschine in Abhängigkeit der genannten Positionsdaten und/oder Verfahrwegsdaten automatisch anzuheben und/oder zu verfahren.

4. Baumaschine nach einem der vorhergehenden Ansprüche, wobei ein Lastaufnahmemittel zum Aufnehmen eines Bauteils ein selsttätiges und/oder fremdenergiebetätigbares Kupplungsteil besitzt, das von der Baumaschinen-Steuervorrichtung (205) automatisch lösbar und/oder schließbar ist.

5. Baumaschine nach einem der vorhergehenden Ansprüche, wobei die Baumaschinen-Steuervorrichtung (205) dazu ausgebildet ist, anhand von Positionsdaten vom Baustellenleitrechner (910) eine aufgenommene Last von einem Lastaufnahmepunkt (X1, Y1, Z1, ϕ1) zu einem Verbau- bzw. Absetzpunkt (X2, Y2, Z2, ϕ2) automatisch zu verfahren, wobei die genannten Positionsdaten vorzugsweise Lagekoordinaten (X,Y,Z) in einem dreidimensionalen Koordinatensystem und eine Winkelkoordinate (ϕ), die die Ausrichtung des Bauteils um eine aufrechte Drehachse angibt, umfassen, wobei eine Drehvorrichtung zum Verdrehen des Lastaufnahmemittels der Baumaschine um eine aufrechte Drehachse, insbesondere eine Drehkatze und/oder ein drehbares Lastaufnahmemittel, vorgesehen ist, wobei die Baumaschinen-Steuervorrichtung (205) dazu ausgebildet ist, die Drehvorrichtung anhand von digitalen Informationen vom Baustellenleitrechner (910) zu betätigen.

6. Baumaschine nach einem der vorhergehenden Ansprüche, wobei ein Verfahr-Steuer-Modul (990), das am Lastaufnahmemittel der Baumaschine und/oder an einem daran aufgenommenen, zu verfahrenden Bauteil positionierbar ist, vorgesehen ist und zumindest ein Bedienelement (1116, 1118, 1121) aufweist, dessen Betätigungsachse mit einer Verfahrachse der Baumaschine zusammenfällt.

7. Baumaschine nach dem vorhergehenden Anspruch, wobei das Verfahr-Steuer-Modul (990) in ein bestimmungsgemäß am Körper eines Maschinenbedieners zu tragendes Anziehteil integriert ist, das selbsthaltend an einem Körperglied anziehbar ist, wobei zumindest ein Bedienelement (993, 994) des Verfahr-Steuer-Moduls (990) in einen Handschuh (992) integriert ist, mit dem der Maschinenbediener bestimmungsgemäß das Lastaufnahmemittel der Baumaschine und/oder ein daran aufgenommenes, zu verfahrendes Bauteil greift, und das Verfahr-Steuer-Modul (990) zur drahtlosen Kommunikation mit der Baumaschinen-Steuervorrichtung (205) ausgebildet ist.

8. Baumaschine nach einem der vorhergehenden Ansprüche, wobei das Steuerungs-Konfigurationsmodul (920) dazu ausgebildet ist, eine von der Baumaschinen-Steuervorrichtung (205) berücksichtigte Arbeitsbereichsbegrenzungs-Funktion in Abhängigkeit von digitalen Informationen aus dem Bauwerkdatenmodell (300) zu verändern und die Arbeitsbereichsbegrenzungs-Funktion in Abhängigkeit von Baufortschritten am zu errichtenden und/oder zu bearbeitenden Bauwerk unter Berücksichtigung von digitalen Informationen aus dem Bauwerkdatenmodell automatisch zu aktualisieren und/oder automatisch zyklisch oder laufend anzupassen, wobei ein Kollisionsbestimmungsmodul (700) zum Abgleichen von Maschinendaten der Baumaschine, die deren Aufstellungsort und/oder Arbeitsbereich charakterisieren, mit Bauwerksdaten aus dem Bauwerksdatenmodell (300), die Bauwerkskonturen und/oder topografische Bauwerks-Umgebungskonturen charakterisieren, vorgesehen ist und das Steuerungs-Konfigurationsmodul (920) dazu ausgebildet ist, auf Basis des genannten Abgleichs die Arbeitsbereichsbegrenzungs-Funktion anzupassen.

9. Verfahren zum Steuern einer Baumaschine gemäß Anspruch 1, insbesondere eines Krans (200), unter Verwendung eines Bauwerkdatenmodells (300), das digitale Informationen über ein zu errichtendes und/oder zu bearbeitendes Bauwerk enthält, mit folgenden Schritten:
- Bereitstellen von digitalen Informationen aus dem Bauwerkdatenmodell (300) an eine Baumaschine, insbesondere einen Kran (200),
- Beeinflussung zumindest einer Steuerungsfunktion einer Baumaschinen-Steuereinrichtung (205) in Abhängigkeit der bereitgestellten digitalen Informationen aus dem Bauwerkdatenmodell (300), wobei mittels zumindest einer Erfassungseinrichtung (800) ein Ist-Zustand des Bauwerks und das Vorhandensein bestimmter Bauwerksteile, erfasst wird, wobei von einem Baufortschritt-Bestimmungsmodul (810) der erfasste Ist-Zustand des Bauwerks mit digitalen Informationen aus dem Bauwerkdatenmodell (300) verglichen wird und in Abhängigkeit des Vergleichs bestimmte digitale Informationen aus dem Bauwerkdatenmodell (300) an die Baumaschinen-Steuervorrichtung (205) bereitgestellt werden,
**dadurch gekennzeichnet, dass**
in Abhängigkeit der bestimmten digitalen Informationen aus dem Bauwerkdatenmodell (300), die der Baumaschine in Abhängigkeit des bestimmten Baufortschritts bereitgestellt werden, auf einer Anzeigevorrichtung (820; 211), die an der Baumaschine oder einem Steuerstand (2) zum Fernsteuern der Baumaschine angeordnet ist, eine virtuelle Darstellung des Bauwerks gemäß dem bestimmten Ist-Zustand und eine virtuelle Darstellung der nächsten von der Baumaschine auszuführenden Arbeitsaufgabe dargestellt wird, wobei in Abhängigkeit des bestimmten Ist-Zustands des Bauwerks und von digitalen Informationen aus dem Bauwerkdatenmodell (300) in der virtuellen Darstellung des Bauwerks eine virtuelle Darstellung des nächsten zu bearbeitenden Bauteils angezeigt und dessen Einbauposition am Bauwerk eingeblendet wird.

10. Verfahren nach dem vorhergehenden Anspruch, wobei wobei mittels einer Erfassungsvorrichtung (830) ein im Aufnahme- und/oder Arbeitsbereich der Baumaschine befindliches Bauteil automatisch erfasst wird, wobei in Abhängigkeit des erfassten Bauteils aus dem Bauwerkdatenmodell (300) digitale Informationen betreffend die Bearbeitung des erfassten Bauteils bereitgestellt werden, und wobei von der Baumaschinen-Steuervorrichtung (205) ein Bearbeitungsschritt betreffend das erfasste Bauteil auf Basis der vom Bauwerkdatenmodell (300) bereitgestellten digitalen Informationen automatisch ausgeführt wird.

11. Verfahren nach dem vorhergehenden Anspruch, wobei die digitalen Informationen aus dem Bauwerkdatenmodell (300) Positionsdaten, die den Bestimmungsort des Bauteils angeben, und/oder Verfahrwegsdaten, die den Verfahrweg des Bauteils angeben, bereitgestellt werden und von der Baumaschinen-Steuervorrichtung (205) das Bauteil in Abhängigkeit der genannten Positionsdaten und/oder Verfahrwegsdaten automatisch gehoben und/oder verfahren wird.

12. Verfahren nach einem der vorhergehenden Ansprüche, wobei folgende Schritte ausgeführt werden:
- automatisches Auswählen einer für die Errichtung und/oder Bearbeitung des Bauwerks (400) geeigneten Baumaschine (200) anhand des Bauwerkdatenmodells (300), wobei für das genannte automatische Auswählen folgende Schritte ausgeführt werden:
- Bereitstellen eines Maschinendatenmodells (500), das digitale Informationen über verschiedene Baumaschinenmodelle enthält,
- automatisches Identifizieren von relevanten Informationen aus dem Bauwerkdatenmodell (300) anhand von Kriterien, die von dem Maschinendatenmodell (500) vorgegeben werden und Maschinendaten, in denen sich die verschiedenen Baumaschinenmodelle unterscheiden, betreffen,
- automatisches Vergleichen der identifizierten Informationen aus dem Bauwerkdatenmodell (300) mit den Maschinendaten verschiedener Baumaschinen aus dem Maschinendatenmodell (500), und
- automatisches Auswählen der geeigneten Baumaschine anhand des genannten Vergleichs, wobei bei dem vorgenannten Schritt des Identifizierens von relevanten Informationen aus dem Bauwerkdatenmodell (300) zumindest eine der folgenden Informationen ausgelesen wird:
Bauwerkshöhe, Gewicht des schwersten zu versetzenden Bauteils, Fläche und/oder Querschnittserstreckung des Bauwerks im Aufriss, und maximale Entfernung zwischen einer Bauteil-Anlieferungsstation und einem BauteilBestimmungsort, und
wobei beim vorgenannten Vergleichen die zumindest eine ausgelesene Information aus dem Bauwerkdatenmodell (300) mit Maschinendaten aus dem Maschinendatenmodell (500), die zumindest eine der folgenden Informationen enthalten: Maschinenhubhöhe, maximales Hubgewicht und Maschinenreichweite, verglichen wird.

13. Verfahren nach einem der vorhergehenden Ansprüche, wobei folgende Schritte ausgeführt werden:
- Bestimmen einer Aufstellposition und/oder Überprüfen einer bestimmten Aufstellposition einer/der ausgewählten Baumaschine relativ zu dem zu errichtenden und/oder zu bearbeitenden Bauwerk unter Verwendung von digitalen Informationen aus dem Bauwerkdatenmodell (300), wobei beim Bestimmen und/oder Überprüfen der Arbeitsposition folgende Schritte ausgeführt werden:
- automatisches Identifizieren von relevanten Informationen aus dem Bauwerkdatenmodell (300) und von relevanten Informationen aus dem Maschinendatenmodell (500), wobei die Informationen aus dem Bauwerkdatenmodell (300) zumindest Bauwerksbemaßungen und die Informationen aus dem Maschinendatenmodell (500) zumindest den Arbeitsbereich der ausgewählten Baumaschine umfassen, und
automatisches Abgleichen des Arbeitsbereichs der Baumaschine mit Bauwerkskonturen zum Überprüfen von einer ausreichenden Reichweite und/oder von möglichen Kollisionen, wobei der Arbeitsbereich der ausgewählten Baumaschine anhand der vorgenannten Kollisionprüfung automatisch begrenzt wird und das Bauwerkdatenmodell (300) durch die festgelegten Arbeitsbereichsbeschränkungen aktualisiert wird, wobei eine von der Baumaschinensteuervorrichtung (205) berücksichtigte Arbeitsbereichsbegrenzungs-Funktion durch ein Arbeitsbereichsbegrenzungs-Einstellmodul (710) in Abhängigkeit von digitalen Informationen aus dem Bauwerkdatenmodell (300) verändert wird, wobei die Arbeitsbereichsbegrenzungs-Funktion in Abhängigkeit von Baufortschritten am zu errichtenden und/oder zu bearbeitenden Bauwerk unter Berücksichtigung von digitalen Informationen aus dem Bauwerkdatenmodell automatisch aktualisiert angepasst wird, wobei von einem Kollisions-Bestimmungsmodul (700) Maschinendaten der Baumaschine, die deren Aufstellungsort und/oder Arbeitsbereich charakterisieren, mit Bauwerksdaten aus dem Bauwerksdatenmodell (300), die Bauwerkskonturen und/oder topografische Bauwerks-Umgebungskonturen charakterisieren, miteinander abgeglichen werden, wobei auf Basis des genannten Abgleichs die Arbeitsbereichsbegrenzungs-Funktion durch das Arbeitsbereichsbegrenzungs-Einstellmodul (710) angepasst wird.

14. Baustellenleitrechner, wobei folgende Komponenten vorgesehen sind:
- eine Datenkommunikations-Einrichtung (900) zum Bereitstellen von digitalen Informationen aus dem Bauwerkdatenmodell (300) an eine Baumaschine gemäß Anspruch 1, insbesondere einen Kran (200),
- ein Steuerungs-Konfigurationsmodul (920) zur Beeinflussung zumindest einer Steuerungsfunktion einer Baumaschinen-Steuereinrichtung (205) in Abhängigkeit der bereitgestellten digitalen Informationen aus dem Bauwerkdatenmodell (300),
**dadurch gekennzeichnet, dass**
das Steuerungs-Konfigurationsmodul (920) dazu ausgebildet ist, in Abhängigkeit der bestimmten digitalen Informationen aus dem Bauwerkdatenmodell (300), die der Baumaschine in Abhängigkeit des bestimmten Baufortschritts bereitgestellt werden, auf einer Anzeigevorrichtung (820; 211), die an der Baumaschine oder einem Steuerstand zum Fernsteuern der Baumaschine angeordnet ist, eine virtuelle Darstellung des Bauwerks gemäß dem bestimmten Ist-Zustand und eine virtuelle Darstellung der nächsten von der Baumaschine auszuführenden Arbeitsaufgabe anzuzeigen, sowie in Abhängigkeit des bestimmten Ist-Zustands des Bauwerks in der virtuellen Darstellung des Bauwerks eine virtuelle Darstellung des nächsten zu bearbeitenden Bauteils anzuzeigen und dessen Einbauposition am Bauwerk einzublenden.

## Claims

1. Construction machine, in particular a crane (200) or an excavator, having a construction machine control apparatus (205) for controlling pieces of working equipment of the construction machine, comprising a data communication device (900) connectable to a master construction site computer (910) for receiving and processing digital information from a structure data model (300) to which the master construction site computer (910) has access; and a control configuration module (920) for influencing at least one control function of the construction machine control apparatus (205) in dependence on the received digital information from the structure data model (300), wherein at least one detection device (800) is provided for detecting an actual state of the structure, in particular the presence of specific structure parts; wherein a construction phase determination module (810) is provided for comparing the detected actual state of the structure with digital information from the structure data model (300) and for determining the construction phase in dependence on the comparison, wherein the data communication device (900) is configured to provide specific digital information from the structure data model (300) to the construction machine control apparatus (205) in dependence on the determined construction phase,
**characterized in that**
the control configuration module (920) is configured to display a virtual representation of the structure in accordance with the determined actual state and a virtual representation of the next work task to be carried out by the construction machine on a display apparatus (820; 211) that is arranged at the construction machine or at a control station for the remote control of the construction machine and to fade-in the installation position thereof on the structure in dependence on the specific digital information from the structure data model (300) that is provided to the construction machine in dependence on the determined construction progress.

2. Construction machine in accordance with the preceding claim, wherein a construction element localization module (950) is provided for localizing a construction element to be picked up by the construction machine on the construction site with reference to digital information from the structure data model (300) of the master construction site computer (910), with the construction machine control apparatus (205) having a travel module for the automated traveling of the construction element thus localized with reference to position coordinates of the construction element provided by the master construction site computer (910).

3. Construction machine in accordance with one of the preceding claims, wherein a detection apparatus (830), in particular comprising a camera (210) and/or an imaging sensor and/or a barcode scanner and/or an RFID reader is provided for detecting and/or identifying a construction element located in the pick-up region and/or working range of the construction machine; wherein the data communication device (900) is configured to provide digital information relating to the working of the detected construction element in dependence on the detected and/or identified construction element from the structure data model (300) to the construction machine control apparatus (205), wherein the control configuration module (920) is configured to automatically carry out a working step relating to the detected construction element on the basis of the digital information provided by the structure data model (300), wherein the digital information from the structure data model (300) comprise position data that indicate the destination of the construction element and/or travel path data that indicate the travel path of the construction element; wherein the control configuration module (920) is configured to raise and/or to travel the construction machine automatically in dependence on said position data and/or travel path data.

4. Construction machine in accordance with one of the preceding claims, wherein a load suspension means for picking up a construction element has a coupling part that is automatic and/or actuable by external energy and that is automatically releasable and/or closable by the construction machine control apparatus (205).

5. Construction machine in accordance with one of the preceding claims, wherein the construction machine control apparatus (205) is configured to automatically travel a suspended load from a load pick-up point (X1, Y1, Z1, ϕ1) to an installation point or place-down point (X2, Y2, Z2, ϕ2) using position data from the master construction site computer (910); wherein said position data preferably comprise location coordinates (X, Y, Z) in a three-dimensional coordinate system and an angle coordinate (ϕ) that indicates the orientation of the construction element about an upright axis of rotation, wherein a rotational apparatus for rotating the load pick-up means of the construction machine about an upright axis of rotation, in particular a rotary trolley and/or a rotational load suspension means; wherein the construction machine control apparatus (205) is configured to actuate the rotational apparatus with reference to digital information from the master construction site computer (910).

6. Construction machine in accordance with one of the preceding claims, wherein a travel control module (990) is provided that can be positioned at the load suspension means of the construction machine and/or at a construction element suspended thereat and to be traveled and has at least one operating element (1116, 1118, 1121) whose actuation axis coincides with a travel axis of the construction machine.

7. Construction machine in accordance with the preceding claim, wherein the travel control module (990) is integrated in a wearable that is to be worn in accordance with its intended purpose on the body of a machine operator and that is to be able to be worn in a self-supporting manner on a body part, wherein at least one operating element (993, 994) of the travel control module (990) is integrated in a glove (992) by which, in accordance with its intended purpose, the machine operator grips the load suspension means of the construction machine and/or a construction element suspended thereat and to be traveled, and the travel control module (990) is configured for wireless communication with the construction machine control apparatus (205).

8. Construction machine in accordance with one of the preceding claims, wherein the control configuration module (920) is configured to change a working range boundary function taken into account by the construction machine control apparatus (205) in dependence on digital information from the structure data model (300) and to automatically update and/or to automatically adapt cyclically or continuously the working range boundary function in dependence on construction progresses at the structure to be erected and/or to be worked while taking account of digital information from the structure data model, wherein a collision determination module (700) is provided for comparing machine data of the construction machine that characterize its installation location and/or working range with structure data from the structure data model (300) that characterize structure contours and/or topographic structure surrounding contours; and wherein the control configuration module (920) is configured to adapt the working range boundary function on the basis of said comparison.

9. Method of controlling a construction machine according to Claim 1, in particular a crane (200), using a structure data model (300) that includes digital information on a structure to be erected and/or to be worked, comprising the following steps:
- providing digital information from the structure data model (300) to a construction machine, in particular to a crane (200);
- influencing at least one control function of a construction machine control device (205) in dependence on the provided digital information from the structure data model (300), wherein an actual state of the structure, in particular the presence of specific structure parts, is detected by means of at least one detection device (800), wherein the detected actual state of the structure is compared with digital information from the structure data model (300) by a construction progress determination module (810) and wherein in dependence on the comparison specific digital information from the structure data model (300) is provided to the construction machine control apparatus (205),
**characterized in that**
a virtual representation of the structure in accordance with the determined actual state and/or a virtual representation of the next work task to be carried out by the construction machine is presented on a display apparatus (820; 211) that is arranged at the construction machine or at a control station (2) for the remote control of the construction machine in dependence on the specific digital information from the structure data model (300) that is provided to the construction machine in dependence on the determined construction progress, wherein a virtual representation of the next construction element to be worked and of the installation position of said construction element at the structure in dependence on the determined actual state of the structure is generated in dependence on digital information from the structure data model (300) and the installation position thereof on the structure is faded-in.

10. Method in accordance with the preceding claim, wherein a construction element located in the pick-up region and/or working range of the construction machine is automatically detected by means of a detection apparatus (830); wherein digital information relating to the working of the detected construction element is provided from the structure data model (300) in dependence on the detected construction element; and wherein a working step relating to the detected construction element is automatically carried out by the construction machine control apparatus (205) on the basis of the digital information provided by the structure data model (300).

11. Method in accordance with the preceding claim, wherein the digital information from the structure data model (300) provide position data that indicate the destination of the construction element and/or travel path data that indicate the travel path of the construction element; and wherein the construction element is automatically lifted and/or traveled by the construction machine control apparatus (205) in dependence on said position data and/or travel path data.

12. Method in accordance with one of the preceding claims, wherein the following steps are carried out:
- automatically selecting a construction machine (200) suitable for the erection and/or working of the structure (400) with reference to the structure data model (300), wherein the following steps are carried out for said automatic selection:
- providing a machine data model (500) that includes digital information on different construction machine models;
- automatically identifying relevant information from the structure data model (300) with reference to criteria that are specified by the machine data model (500) and relate to machine data in which the different construction machine models differ;
- automatically comparing the identified information from the structure data model (300) with the machine data of different construction machinery from the machine data model (500); and
- automatically selecting the suitable construction machine with reference to said comparison wherein at least one of the following pieces of information is read from the structure data model (300) in the aforesaid step of identifying relevant information:
structure height, weight of the heaviest construction element to be moved; area and/or cross-sectional extent of the structure in elevation, and maximum distance between a construction element delivery station and a construction element destination; and
wherein, in the aforesaid comparison, the at least one piece of read information from the structure data model (300) is compared with machine data from the machine data model (500) that include at least one of the following pieces of information: machine lifting height, maximum hoist weight, and machine range.

13. Method in accordance with one of the preceding claims, wherein the following steps are carried out:
- determining an installation position and/or checking a specific installation position of one/of the selected construction machine relative to the structure to be erected and/or to be worked using digital information from the structure data model (300), wherein the following steps are carried out when determining and/or checking the work position:
- automatically identifying relevant information from the structure data model (300) and relevant information from the machine data model (500), wherein the information from the structure data model (300) at least comprises structure dimensions and the information from the machine data model (500) at least comprises the working range of the selected construction machine; and
automatically comparing the working range of the construction machine with structure contours for checking a sufficient range and/or possible collisions, wherein the working range of the selected construction machine is automatically restricted in dependence on the aforesaid collision check and the structure data model (300) is updated by the fixed working range restrictions, wherein a working range boundary function taken into account by the construction machine control apparatus (205) is changed by a working range boundary setting module (710) in dependence on digital information from the structure data model (300), wherein the working range boundary function is automatically updated and adapted in dependence on construction progresses at the structure to be erected and/or to be worked while taking account of digital information from the structure data model, wherein machine data of the construction machine that characterize its installation location and/o working range are compared by a collision determination module (700) with structure data from the structure data model (300) that characterize structure contours and/or topographic surrounding contours; and wherein the working range boundary function is adapted by the working range boundary setting module (710) on the basis of said comparison.

14. Master construction site computer, wherein the following components are provided:
- a data communication device (900) for providing digital information from the structure data model (300) to a construction machine, in particular to a crane (200) according to claim 1;
- a control configuration module (920) for influencing at least one control function of a construction machine control device (205) in dependence on the provided digital information from the structure data model (300),
**characterized in that**
the control configuration module (920) is configured to display a virtual representation of the structure in accordance with the determined actual state and/or a virtual representation of the next work task to be carried out by the construction machine on a display apparatus (820; 211) that is arranged at the construction machine or at a control station for the remote control of the construction machine in dependence on the specific digital information from the structure data model (300) that is provided to the construction machine in dependence on the determined construction progress and to display a virtual representation of the next construction element to be worked and to fade-in its installation position at the structure in dependence on the determined actual state of the structure, in the virtual representation of the structure.

## Revendications

1. Engin de chantier, en particulier grue (200) ou excavateur, avec un dispositif de commande d'engin de chantier (205) pour la commande d'unités de travail de l'engin de chantier, avec un appareil de communication de données (900) pouvant être relié à un ordinateur de gestion de chantier (910) pour la réception et le traitement d'informations numériques provenant d'un modèle de données d'ouvrage (300), auquel l'ordinateur de gestion de chantier (910) a accès, et un module de configuration de commande (920) pour influencer au moins une fonction de commande de l'appareil de commande d'engin de chantier (205) en fonction des informations numériques reçues à partir du modèle de données d'ouvrage (300), il étant prévu au moins un appareil de détection (800) pour détecter un état réel de l'ouvrage, en particulier la présence de parties d'ouvrage déterminées, il étant prévu un module de détermination de la phase de construction (810) pour comparer l'état réel détecté de l'ouvrage à des informations numériques provenant du modèle de données d'ouvrage (300) et pour déterminer la phase de construction en fonction de la comparaison, l'appareil de communication de données (900) étant configuré pour fournir au dispositif de commande d'engin de chantier (205) des informations numériques déterminées à partir du modèle de données d'ouvrage (300) en fonction de la phase de construction déterminée,
**caractérisé en ce que**
le module de configuration de commande (920) est configuré pour, en fonction des informations numériques déterminées provenant du modèle de données d'ouvrage (300), qui sont fournies à l'engin de chantier en fonction de l'avancement déterminé de la construction, afficher sur un dispositif d'affichage (820 ; 211), qui est agencé sur l'engin de chantier ou sur un poste de commande pour la commande à distance de l'engin de chantier, une représentation virtuelle de l'ouvrage selon l'état réel déterminé et une représentation virtuelle de la prochaine tâche de travail à exécuter par l'engin de chantier, ainsi qu'afficher, en fonction de l'état réel déterminé de l'ouvrage, dans la représentation virtuelle de l'ouvrage, une représentation virtuelle du prochain composant à traiter et d'insérer sa position de montage sur l'ouvrage.

2. Engin de chantier selon la revendication précédente, dans lequel il est prévu un module de localisation de composant (950) pour localiser un composant à recevoir par l'engin de chantier sur le chantier à l'aide d'informations numériques provenant du modèle de données d'ouvrage (300) de l'ordinateur de gestion de chantier (910), le dispositif de commande d'engin de chantier (205) présentant un module d'approche pour approcher automatiquement le composant ainsi localisé à l'aide de coordonnées de position du composant fournies par l'ordinateur de gestion de chantier (910).

3. Engin de chantier selon l'une quelconque des revendications précédentes, dans lequel un dispositif de détection (830), comprenant en particulier une caméra (210) et/ou un capteur d'imagerie et/ou un scanner de codes à barres et/ou un lecteur RFID, est prévu pour détecter et/ou identifier un composant se trouvant dans la zone de réception et/ou de travail de l'engin de chantier, l'appareil de communication de données (900) étant configuré pour fournir, en fonction du composant détecté et/ou identifié, des informations numériques concernant le traitement du composant détecté au dispositif de commande d'engin de chantier (205) à partir du modèle de données d'ouvrage (300), le module de configuration de commande (920) étant configuré pour exécuter automatiquement une étape de traitement concernant le composant détecté sur la base des informations numériques fournies par le modèle de données d'ouvrage (300), les informations numériques provenant du modèle de données d'ouvrage (300) comprenant des données de position indiquant la destination du composant et/ou des données de trajet indiquant le trajet du composant, le module de configuration de commande (920) étant configuré pour soulever et/ou déplacer automatiquement l'engin de chantier en fonction desdites données de position et/ou données de trajet.

4. Engin de chantier selon l'une quelconque des revendications précédentes, dans lequel un moyen de réception de charge destiné à recevoir un composant possède une partie d'accouplement automatique et/ou actionnable par énergie extérieure, qui peut être détachée et/ou fermée automatiquement par le dispositif de commande d'engin de chantier (205).

5. Engin de chantier selon l'une quelconque des revendications précédentes, dans lequel le dispositif de commande d'engin de chantier (205) est configuré pour déplacer automatiquement une charge reçue d'un point de réception de charge (X1, Y1, Z1, ϕ1) vers un point de pose ou d'installation (X2, Y2, Z2, ϕ2) à l'aide de données de position provenant de l'ordinateur de gestion de chantier (910), lesdites données de position comprenant de préférence des coordonnées de situation (X, Y, Z) dans un système de coordonnées tridimensionnel et une coordonnée angulaire (ϕ) indiquant l'orientation du composant autour d'un axe de rotation vertical, il étant prévu un dispositif de rotation pour faire tourner le moyen de réception de charge de l'engin de chantier autour d'un axe de rotation vertical, en particulier un chariot rotatif et/ou un moyen de réception de charge rotatif, le dispositif de commande d'engin de chantier (205) étant configuré pour actionner le dispositif de rotation à l'aide d'informations numériques provenant de l'ordinateur de gestion de chantier (910).

6. Engin de chantier selon l'une quelconque des revendications précédentes, dans lequel il est prévu un module de commande de déplacement (990) qui peut être positionné sur le moyen de réception de charge de l'engin de chantier et/ou sur un composant à déplacer qui y est reçu, et qui présente au moins un élément de commande (1116, 1118, 1121) dont l'axe d'actionnement coïncide avec un axe de déplacement de l'engin de chantier.

7. Engin de chantier selon la revendication précédente, dans lequel le module de commande de déplacement (990) est intégré dans une partie d'habillage destinée à être portée conformément sur le corps d'un opérateur d'engin, qui peut être enfilée de manière autonome sur un membre du corps, au moins un élément de commande (993, 994) du module de commande de déplacement (990) étant intégré dans un gant (992) avec lequel l'opérateur d'engin saisit conformément le moyen de réception de charge de l'engin de chantier et/ou un composant à déplacer qui y est reçu, et le module de commande de déplacement (990) étant configuré pour la communication sans fil avec le dispositif de commande d'engin de chantier (205).

8. Engin de chantier selon l'une quelconque des revendications précédentes, dans lequel le module de configuration de commande (920) est configuré pour modifier une fonction de limitation de zone de travail prise en compte par le dispositif de commande d'engin de chantier (205) en fonction d'informations numériques provenant du modèle de données d'ouvrage (300) et pour mettre à jour automatiquement la fonction de limitation de zone de travail en fonction de l'avancement de la construction sur l'ouvrage à ériger et/ou à traiter en tenant compte d'informations numériques provenant du modèle de données d'ouvrage et/ou pour l'adapter automatiquement de manière cyclique ou en continu, un module de détermination de collision (700) étant prévu pour comparer des données d'engin de l'engin de chantier, qui caractérisent son lieu d'installation et/ou sa zone de travail, à des données d'ouvrage provenant du modèle de données d'ouvrage (300), qui caractérisent les contours de l'ouvrage et/ou les contours topographiques de l'environnement de l'ouvrage, et le module de configuration de commande (920) étant configuré pour adapter la fonction de limitation de zone de travail sur la base de ladite comparaison.

9. Procédé de commande d'un engin de chantier selon la revendication 1, en particulier d'une grue (200), en utilisant un modèle de données d'ouvrage (300) qui contient des informations numériques sur un ouvrage à ériger et/ou à traiter, avec les étapes suivantes :
- la fourniture d'informations numériques provenant du modèle de données d'ouvrage (300) à un engin de chantier, en particulier une grue (200),
- l'influence d'au moins une fonction de commande d'un appareil de commande d'engin de chantier (205) en fonction des informations numériques fournies à partir du modèle de données d'ouvrage (300), un état réel de l'ouvrage et la présence de parties d'ouvrage déterminées étant détectés au moyen d'au moins un appareil de détection (800), l'état réel détecté de l'ouvrage étant comparé par un module de détermination de l'avancement de la construction (810) à des informations numériques provenant du modèle de données d'ouvrage (300) et, en fonction de la comparaison, des informations numériques déterminées provenant du modèle de données d'ouvrage (300) étant fournies au dispositif de commande d'engin de chantier (205), **caractérisé en ce que**
en fonction des informations numériques déterminées provenant du modèle de données d'ouvrage (300), qui sont fournies à l'engin de chantier en fonction de l'avancement déterminé de la construction, une représentation virtuelle de l'ouvrage selon l'état réel déterminé et une représentation virtuelle de la prochaine tâche de travail à exécuter par l'engin de chantier sont représentées sur un dispositif d'affichage (820 ; 211), qui est agencé sur l'engin de chantier ou sur un poste de commande (2) pour la commande à distance de l'engin de chantier, une représentation virtuelle du prochain composant à traiter étant affichée dans la représentation virtuelle de l'ouvrage en fonction de l'état réel déterminé de l'ouvrage et d'informations numériques provenant du modèle de données d'ouvrage (300) et sa position de montage sur l'ouvrage étant insérée.

10. Procédé selon la revendication précédente, dans lequel un composant se trouvant dans la zone de réception et/ou de travail de l'engin de chantier est détecté automatiquement au moyen d'un dispositif de détection (830), dans lequel, en fonction du composant détecté, des informations numériques concernant le traitement du composant détecté sont fournies à partir du modèle de données d'ouvrage (300), et dans lequel une étape de traitement concernant le composant détecté est exécutée automatiquement par le dispositif de commande d'engin de chantier (205) sur la base des informations numériques fournies par le modèle de données d'ouvrage (300).

11. Procédé selon la revendication précédente, dans lequel les informations numériques provenant du modèle de données d'ouvrage (300) fournissent des données de position indiquant la destination du composant et/ou des données de trajet indiquant le trajet du composant, et le composant est soulevé et/ou déplacé automatiquement par le dispositif de commande d'engin de chantier (205) en fonction desdites données de position et/ou données de trajet.

12. Procédé selon l'une quelconque des revendications précédentes, dans lequel les étapes suivantes sont exécutées :
- la sélection automatique d'un engin de chantier (200) approprié pour l'érection et/ou le traitement de l'ouvrage (400) à l'aide du modèle de données d'ouvrage (300), les étapes suivantes étant exécutées pour ladite sélection automatique :
- la fourniture d'un modèle de données d'engin (500) contenant des informations numériques sur différents modèles d'engin de chantier,
- l'identification automatique d'informations pertinentes à partir du modèle de données d'ouvrage (300) à l'aide de critères qui sont prédéfinis par le modèle de données d'engin (500) et concernent des données d'engin dans lesquelles les différents modèles d'engin de chantier diffèrent,
- la comparaison automatique des informations identifiées à partir du modèle de données d'ouvrage (300) aux données d'engin de différents engin de chantier à partir du modèle de données d'engin (500), et
- la sélection automatique de l'engin de chantier approprié à l'aide de ladite comparaison, dans lequel, lors de l'étape susmentionnée d'identification d'informations pertinentes à partir du modèle de données d'ouvrage (300), au moins l'une des informations suivantes est lue :
la hauteur de l'ouvrage, le poids du composant le plus lourd à déplacer, la surface et/ou l'étendue en coupe transversale de l'ouvrage en élévation, et la distance maximale entre un poste de livraison de composants et une destination de composants, et
dans lequel, lors de la comparaison susmentionnée, l'au moins une information lue à partir du modèle de données d'ouvrage (300) est comparée à des données d'engin provenant du modèle de données d'engin (500), qui contiennent au moins l'une des informations suivantes : la hauteur de levage de l'engin, le poids de levage maximal et la portée de l'engin.

13. Procédé selon l'une quelconque des revendications précédentes, dans lequel les étapes suivantes sont exécutées :
- la détermination d'une position d'installation et/ou la vérification d'une position d'installation déterminée d'un/des engin(s) de chantier sélectionné(s) par rapport à l'ouvrage à ériger et/ou à traiter en utilisant des informations numériques provenant du modèle de données d'ouvrage (300), les étapes suivantes étant exécutées lors de la détermination et/ou de la vérification de la position de travail :
- l'identification automatique d'informations pertinentes provenant du modèle de données d'ouvrage (300) et d'informations pertinentes provenant du modèle de données d'engin (500), les informations provenant du modèle de données d'ouvrage (300) comprenant au moins des dimensions d'ouvrage et les informations provenant du modèle de données d'engin (500) comprenant au moins la zone de travail de l'engin de chantier sélectionné, et
la comparaison automatique de la zone de travail de l'engin de chantier aux contours de l'ouvrage pour vérifier une portée suffisante et/ou des collisions possibles, la zone de travail de l'engin de chantier sélectionné étant automatiquement limitée à l'aide de la vérification de collision susmentionnée et le modèle de données d'ouvrage (300) étant mis à jour par les restrictions de zone de travail établies, une fonction de limitation de zone de la travail prise en compte par le dispositif de commande d'engin de chantier (205) étant modifiée par un module de réglage de limitation de la zone de travail (710) en fonction des informations numériques provenant du modèle de données d'ouvrage (300), la fonction de limitation de la zone de travail étant adaptée automatiquement et actualisée en fonction de l'avancement de la construction sur l'ouvrage à ériger et/ou à traiter en tenant compte d'informations numériques provenant du modèle de données de l'ouvrage, des données d'engin de l'engin de chantier, qui caractérisent son lieu d'installation et/ou sa zone de travail, étant comparées par un module de détermination de collision (700), à des données d'ouvrage provenant du modèle de données d'ouvrage (300) qui caractérisent les contours de l'ouvrage et/ou les contours topographiques de l'environnement de l'ouvrage, la fonction de limitation de la zone de travail étant adaptée par le module de réglage de la limitation de la zone de travail (710) sur la base de ladite comparaison.

14. Ordinateur de gestion de chantier, dans lequel les éléments suivants sont prévus :
- un appareil de communication de données (900) pour fournir des informations numériques provenant du modèle de données d'ouvrage (300) à un engin de chantier selon la revendication 1, en particulier une grue (200),
- un module de configuration de commande (920) pour influencer au moins une fonction de commande d'un appareil de commande d'engin de chantier (205) en fonction des informations numériques fournies provenant du modèle de données d'ouvrage (300),
**caractérisé en ce que**
le module de configuration de commande (920) est configuré pour, en fonction des informations numériques déterminées provenant du modèle de données d'ouvrage (300), fournies à l'engin de chantier en fonction de l'avancement déterminé de la construction, afficher sur un dispositif d'affichage (820 ; 211), qui est agencé sur l'engin de chantier ou sur un poste de commande pour la commande à distance de l'engin de chantier, une représentation virtuelle de l'ouvrage selon l'état réel déterminé et une représentation virtuelle de la prochaine tâche de travail à exécuter par l'engin de chantier, ainsi qu'afficher, en fonction de l'état réel déterminé de l'ouvrage, dans la représentation virtuelle de l'ouvrage, une représentation virtuelle du prochain composant à traiter et d'insérer sa position de montage sur l'ouvrage.
